(19) **Europäisches Patentamt European Patent Office Office européen des brevets**

(11) **EP 2 101 165 B1**

(12) **EUROPEAN PATENT SPECIFICATION**

(45) Date of publication and mention of the grant of the patent:
**12.09.2012 Bulletin 2012/37**

(51) Int Cl.:
*G01J 5/34* (2006.01)    *G01Q 30/10* (2010.01)
*G01Q 60/30* (2010.01)    *G01Q 60/40* (2010.01)
*G01Q 80/00* (2010.01)    *G11B 9/02* (2006.01)
*B82Y 35/00* (2011.01)

(21) Application number: **08004823.4**

(22) Date of filing: **14.03.2008**

(54) **Method for creating and/or detecting a pyroelectric response, detector comprising a pyroelectric material and apparatus for investigating a sample comprising a pyroelectric material**

Verfahren zur Erzeugung und/oder Erkennung einer pyroelektrischen Antwort, Detektor mit einem pyroelektrischen Material und Gerät zur Untersuchung einer Probe mit einem pyroelektrischen Material

Procédé pour créer et/ou détecter une réponse pyroélectrique, détecteur comportant un matériau pyroélectrique et appareil d'investigation d'un échantillon comportant un matériau pyroélectrique

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**16.09.2009 Bulletin 2009/38**

(73) Proprietor: **Institut für nanostrukturierte Materialien & Photonik Joanneum Research Forschungs-Gesellschaft mbh 8160 Weiz (AT)**

(72) Inventors:
• **Groten, Jonas**
  **8010 Graz (AT)**
• **Stadlober, Barbara, Dr.**
  **8044 Graz (AT)**
• **Zirkl, Martin, Dr.**
  **8071 Dörfla (AT)**

(74) Representative: **Grünecker, Kinkeldey, Stockmair & Schwanhäusser Leopoldstrasse 4 80802 München (DE)**

(56) References cited:
**EP-A- 0 186 813      JP-A- 5 182 261
JP-A- 10 040 599     US-A- 3 885 301
US-B1- 6 597 639**

• LIU XIAOYAN ET AL: "Thermal stability of LiTaO3 domains engineered by scanning force microscopy" APPLIED PHYSICS LETTERS, AIP, AMERICAN INSTITUTE OF PHYSICS, MELVILLE, NY, vol. 89, no. 14, 4 October 2006 (2006-10-04), pages 142906-1-3, XP012086168 ISSN: 0003-6951
• GUTHNER P ET AL: "LOCAL POLING OF FERROELECTRIC POLYMERS BY SCANNING FORCE MICROSCOPY" APPLIED PHYSICS LETTERS, AIP, AMERICAN INSTITUTE OF PHYSICS, MELVILLE, NY, vol. 61, no. 9, 31 August 1992 (1992-08-31), pages 1137-1139, XP000294516 ISSN: 0003-6951

**Description**

The present invention generally relates to methods and apparatuses for manufacturing and/or investigating material layers having pyroelectric properties, as well as other samples comprising pyroelectric materials, and to detectors comprising pyroelectric materials.

JP05 182261A discloses to measure a pyroelectric corresponds of a ferroelectric film to a temperature raise by detecting a pyroelectric current flowing between the substrate and a conductive film formed on top of the ferroelectric film.

JP 10 040599 A discloses that data may be read from a recording medium by utilizing a pyroelectric effect.

US 6 597 639 B1 discloses a thermal near-field heater that may be used for locally heating a portion of a ferroelectric material. The thermal near-field heater may be used for writing data to a ferroelectric recording medium.

US 3 885 301 A discloses poling local portions of a pyroelectric film by varying either the temperature and/or the electric potential of localized area of the film.

EP 0 186 813 A discloses reading data from a ferroelectric storage medium by periodically heating the storage medium and detecting secondary electrons reflected and/or defracted from the storage medium to detect a polarization of ferroelectric domains of the storage medium.

Liu Xioaoyan et al.: Thermal stability of LiTaO3 domains engineered by scanning force microscopic", Applied Physics Letters, 89 (14), pages 142906-1-3 (2006) and Guthner P et al: "Local poling of ferroelectric polymers by scanning force microscopy" Applied Physics Letters, 61 (9), pages 1137-1139 (1992), disclose measurements of a pyroelelectric response of a ferroelectric material layer.

Pyroelectricity may form the basis for a broad range of detectors for long-wavelength infrared radiation which may, for example, be used in cameras for thermographic imaging. Compared to cameras for thermographic imaging which are based on the creation of electron-hole pairs in a narrow bandgap semiconductor, for example a III-V semiconductor such as GaAs or a II-VI semiconductor such as ZnSe or CdTe, pyroelectric detectors have the advantage that they may be used at room temperature or slightly below, whereas semiconductor based detectors for infrared radiation may require cooling to much lower temperatures, for example by means of liquid nitrogen and/or liquid helium.

A pyroelectric detector for infrared radiation according to the state of the art is disclosed, for example, in Lang, S. B: "Pyroelectricity: From Ancient Curiosity to Modern Imaging Tool", Physics Today, August 2005, pages 31-36. The detector comprises a ferroelectric wafer which is connected to a silicon-based multiplexer. Irradiation of the ferroelectric wafer with infrared radiation may create a pyroelectric response in the ferroelectric wafer, which may be detected by means of a processing circuit connected to the silicon-based multiplexer.

A problem of pyroelectric detectors according to the state of the art is that a significant crosstalk may occur between individual pixel elements of the ferroelectric wafer. The crosstalk may adversely affect the resolution obtainable by means of the detector. Therefore, only relatively low resolutions such as, for example, 256 x 128 pixels or 320 x 240 pixels may be obtained by means of pyroelectric detectors according to the state of the art.

In spite of the broad range of application of detectors comprising pyroelectric materials, pyroelectricity is one of the least investigated properties of solid and soft ferroelectrics. A method and an apparatus for a spatially resolved measurement according to the state of the art is described, for example, in Peterson, B. W. et. al.: "Mapping Surface Polarization in Thin Films of the Ferroelectric Polymer P(VDF-TrFE)", Ferroelectrics, 304: 51-54, 2004. In this document, a scanning focused laser setup is used to induce heat fluctuations in portions of a ferroelectric material layer and to detect the pyroelectric response of the ferroelectric material macroscopically. The resolution of this approach, however, is limited to the laser focus size, which is limited by the optical system (typically, on the order of magnitude of micrometers) used to focus the laser radiation and the thermal conduction in the sample. It may, however, be desirable to investigate samples with ferroelectric domains being smaller than the optical limit..

It is, therefore, an object of the present invention to provide a detector comprising a pyroelectric material and having a reduced crosstalk compared to detectors according to the state of the art and a method for the formation of a detector having reduced crosstalk..

It is a further object of the present invention to provide a method and an apparatus for the investigation of pyroelectric materials allowing measurements at a higher resolution than the resolution obtainable by means of an optical microscope.

A method of investigating a sample comprising a pyroelectric material according to the present invention comprises the features defined in claim 1.

The method according to the present invention allows local measurements of the pyroelectric response of the pyroelectric material, wherein the resolution of the measurement may be higher than the resolution of an optical microscope, in particular if the tip is a tip of an atomic force microscope.

If there is a potential difference between the tip and a portion of the surface of the material layer in the vicinity of the tip, the alternating voltage may induce a periodically oscillating force on the tip which may be detected by means of methods known to persons skilled in the art such as, for example, providing the tip at an end of a cantilever and detecting a deflection of the cantilever, for example by measuring a reflection of light at the cantilever. If the electric potential difference between the surface of the material layer and the tip is reduced by adjusting the direct voltage, the strength of the oscillating force will be reduced. Thus, a contact-less measurement of the electric potential of the surface of the material layer can be performed. Advantageously, this may help to reduce distortions of the material layer caused by the measuring apparatus.

While in some embodiments, a poled region may be formed in the pyroelectric material before or during the investigation of the sample, as described below, in other embodiments, the formation of the poled region may be omitted. Thus, a remanent ferroelectric polarization already present in the pyroelectric material may be detected, wherein the remanent ferroelectric polarization of the pyroelectric material is substantially not influenced or influenced to a small extent by the measurement. The sample may comprise a structure which is artificially formed, or may comprise a natural specimen of a pyroelectric material.

In some embodiments, the method according to the present invention may further comprise moving the tip over the surface of the pyroelectric material and performing a plurality of measurements of the electric potential of the surface of the pyroelectric material while moving the tip. Thus, one- or two-dimensional measurements of the pyroelectric response of the pyroelectric material may be performed.

In some embodiments, the electrically conductive tip is provided above the pyroelectric material before changing the temperature of at least a portion of the sample and measuring the electric potential of the surface of the pyroelectric material. An electric voltage is applied between the electrically conductive tip and a bottom electrode to pole a region of the pyroelectric material between the tip and the bottom electrode. A portion of the pyroelectric material outside the region is not poled.

Applying the electric voltage between the tip and the bottom electrode can create an electric field in the material layer, in particular in the vicinity of the tip. A ferroelectric polarization of the material layer may align with the electric filed. Due to the ferroelectric properties of the material layer, at least a portion of the polarization may remain after the electric voltage is switched of such that a remanent ferroelectric polarization in the poled region of the material layer is created and/or increased. Hence, a local amplification of the ferroelectric polarization may be obtained in the region. When the temperature of the poled region of the material layer is changed, the ferroelectric polarization may induce a detectable pyroelectric response.

In some embodiments, the method may be applied for a measurement of the tempereature change or properties related to the temperaure change such as, for example, an intensity of electromagnetic radiation absorbed by the material layer or an absorption layer provided in the vicinity of the material layer or, in other embodiments, the occurrence of an exothermic or endothermic chemical reaction in the vicinity of the poled region. Due to the local amplification of the ferroelectric polarization in the poled region, the pyroelectric response which is obtained in the poled region may be stronger than a pyroelectric response in portions of the material layer other than the poled region, or substantially no pyroelectric response may be obtained in portions of the material layer other than the poled region. Therefore, a measurement of a local temperature change in the poled region can be performed.

In some of these embodiments, a plurality of poled regions can be formed in the material layer. Unpoled portions of the material layer having a lower ferroelectric polarization than the poled regions and/or substantially no ferroelectric polarization at all can be provided between the poled regions. The presence of the unpoled portions of the material layer may help to reduce a crosstalk between the pyroelectric response obtained in the poled portions of the material layer. Applications of samples wherein a plurality of poled regions are formed in the material layer may include detectors for electromagnetic radiation, for example infrared sensors for thermography. For this purpose, an array or matrix of poled regions may be formed in the material layer, and the pyroelectric response of each of the poled regions can be detected.

In other embodiments, the method according to the present invention can be applied for the investigation of pyroelectric properties of material layers comprising ferroelectric domains and/or samples comprising such a material layer. In such embodiments, the temperature of at least one poled region may be changed in a predetermined manner, and the pyroelectric response of the poled region to the predetermined temperature change can be measured. Thus, local measurements of pyroelectric properties such as, for example, pyroelectric coefficients can be performed. A resolution of the measurements can be approximately equal to or smaller than the size of the poled region.

In some of these embodiments, the tip may be a tip of an atomic force microscope. Thus, a relatively small diameter of the poled region can be obtained. Moreover, the atomic force microscope may allow a spatially resolved measurement of the pyroelectric response, wherein the resolution obtained may be greater than the resolution obtained by means of methods according to the state of the art wherein a pyroelectric material layer is scanned by means of a laser beam. Hence, more precise measurements of properties of material layers comprising ferroelectric domains may be obtained.

In some embodiments of the present invention, the tip may be provided at a distance to the surface of the material layer. Thus, the region of the material layer may be poled in a contact-less manner. This may help to reduce or substantially avoid distortions of measurements of pyroelectric properties caused by the apparatus used for poling, and may help to avoid alterations of the material layer other than a creation of a remanent ferroelectric polarization. In other embodiments the tip may contact the material layer when the region in the material layer is poled. For example, in embodiments wherein the tip is a tip of an atomic force microscope, the poling of the region may be performed in contact mode.

In some embodiments, changing the temperature may comprise irradiating at least a portion of the sample with electromagnetic radiation. In some of these embodiments, the electromagnetic radiation may have a predetermined intensity. Thus, a predetermined temperature change may be created. This may help to obtain reproducible measurements of pyroelectric properties of the material layer. In other embodiments, the electromagnetic radiation may be supplied from a radiation source. In such embodiments, detecting the pyroelectric response may help to measure an intensity of the radiation received from the radiation source.

The electromagnetic radiation can be supplied to at least a portion of the sample by means of an optical conductor. The optical conductor may be arranged on a side of a substrate on which the pyroelectric material opposite the pyroelectric material. In other embodiments, the optical conductor may be connected to the tip.

An apparatus for investigating a sample comprising a material layer formed over a bottom electrode, wherein the material layer has pyroelectric properties comprises the features defined in claim 8.

By applying the electric voltage between the tip and the bottom electrode, the ferroelectric polarization of the material layer may locally be increased in the vicinity of the tip. Since the tip of an atomic force microscope may have a relatively small size, a small poled region having pyroelectric properties may be formed in the material layer. By changing the temperature of at least the portion of the material layer and measuring a potential difference between the surface of the sample and the tip, the pyroelectric response can be measured. In some embodiments, this can be done in a contact-less manner by means of the atomic force microscope. Hence, pyroelectric properties of the material layer can be measured at a relatively high resolution provided by the atomic force microscope. Thus, the resolution of the measurements can be improved compared to an apparatus according to the state of the art wherein a pyroelectric material layer is scanned by means of a laser beam.

The means for changing a temperature of at least a portion of the sample may comprise means for irradiating at least a portion of the sample with electromagnetic radiation. Thus, the temperature may be changed in a convenient manner.

The means for irradiating at least a portion of the sample with electromagnetic radiation may comprise an optical conductor adapted to supply the electromagnetic radiation to the sample. In some embodiments, the sample holder can be provided between the tip and the optical conductor. In other embodiments, the tip can comprise an acute portion of the optical conductor, and may further comprise an electrically conductive material connected to the acute portion of the optical conductor for providing the electrical conductivity of the tip.

In some embodiments, the means for changing a temperature of at least a portion of the sample comprise means for irradiating the sample with electromagnetic radiation, wherein an intensity of the electromagnetic radiation is altered in a periodic manner. The means for measuring a potential difference between the surface at the sample and the tip are adapted for detecting a change of a potential difference between a surface of the sample and the tip in response to the periodic alteration of the intensity of the electric radiation when the sample is provided in the sample holder to detect a pyroelectric response of the material layer.

The apparatus allows detecting the pyroelectric response of the material layer at the resolution of the atomic force microscope. Thus, the resolution of the measurement may be improved compared to an apparatus according to the state of the art.

Further embodiments of the present invention will now be described with respect to the enclosed figures, wherein

Fig. 1 shows a schematic view of an apparatus according to an embodiment of the present invention;

Figs. 2a and 2b show schematic cross-sectional view of a sample and a cantilever comprising a tip in stages of a method of creating a pyroelectric response according to an embodiment of the present invention;

Fig. 3 shows a schematic cross-sectional view of a cantilever comprising a tip which may be used in an apparatus according to another embodiment of the present invention;

Fig. 4 shows a schematic perspective view of a cantilever comprising a tip which may be used in an apparatus according to yet another embodiment of the present invention;

Figs. 5a and 5b shows schematic cross-sectional views of a detector according to the present invention in stages of a method according to another embodiment of the present invention;

Figs. 5c and 5d show schematic cross-sectional views of another detector according to the present invention in stages of a method according to a further embodiment of the present invention;

Fig. 6 shows a schematic view of a thermal imaging system according to an embodiment of the present invention;

Fig. 7 shows a diagram illustrating an electric field created in a material layer in a method according to an embodiment of the present invention;

Fig. 8 shows a diagram illustrating results of measurements of a an electric potential of a surface of a material layer in a method according to an embodiment of the present invention;

Fig. 9 shows a diagram illustrating a relaxation of a remanent ferroelectric polarization in a material layer after creating a poled region in the material layer;

Fig. 10 shows a diagram illustrating a temperature change in a material layer obtained in a method according to an embodiment of the present invention; and

Figs. 11 and 12 shows diagrams illustrating results of a measurement of a pyroelectric response in a method according to an embodiment of the present invention;

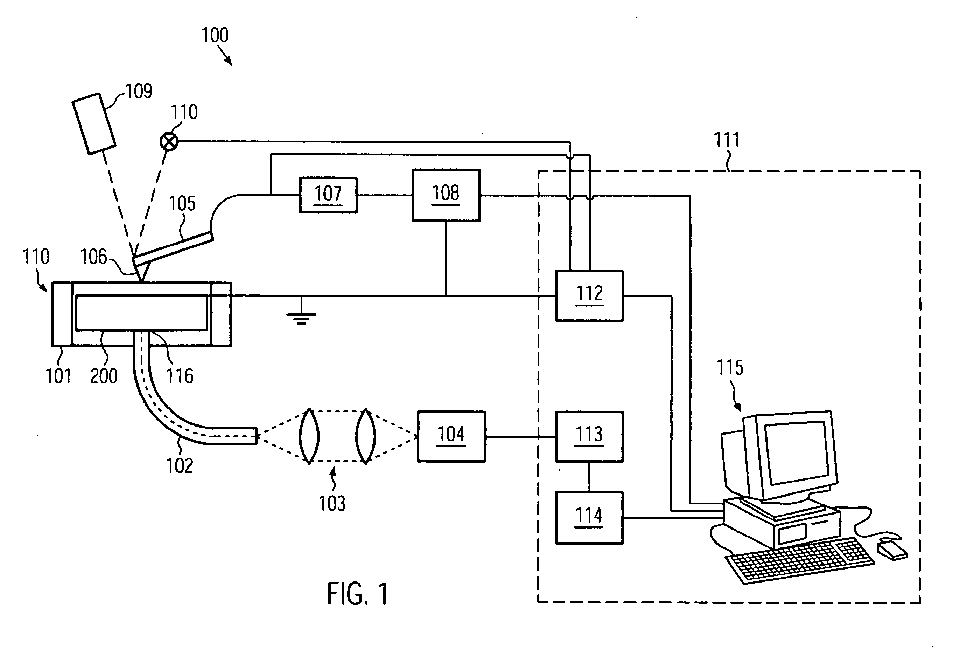

Fig. 1 shows a schematic view of an apparatus 100 according to an embodiment of the present invention. The apparatus 100 comprises an atomic force microscope 116. The atomic force microscope 116 comprises a cantilever 105 comprising an electrically conductive tip 106 and a sample holder 101, wherein a sample 200 may be provided for investigation of the sample 200 by means of the apparatus 100.

In some embodiments, the atomic force microscope 116 can be provided in a substantially gas-tight vessel, and the apparatus may comprise means for supplying one or more gases to the gas-tight vessel and/or means for removing one or more gases to the gas-tight vessel. In some embodiments, inert gases, for example a noble gas such as helium, neon, argon, krypton and/or xenon, or a molecular gas such as nitrogen may be supplied to the gas-tight vessel. This may help to reduce adverse influences of oxygen and/or moisture from the atmosphere on the sample 200, as will be explained in more detail below. In some embodiments, gases supplied to the gas-tight vessel may be cleaned, for example by flowing the gases through a filter, in order to reduce a concentration of dust and/or other contaminants. In still further embodiments, the gas-tight vessel may be evacuated.

The sample holder 101 can be configured for moving the sample 200, when provided in the sample holder 101, relative to the tip 106. For this purpose, piezoelectric actuators of a type known to persons skilled in the art can be provided in the sample holder 101 and/or between a frame of the apparatus 100 (not shown) and the sample holder 101. In other embodiments, piezoelectric actuators can be provided to move the cantilever 105 and the tip 106, wherein the sample holder 101 may remain fixed.

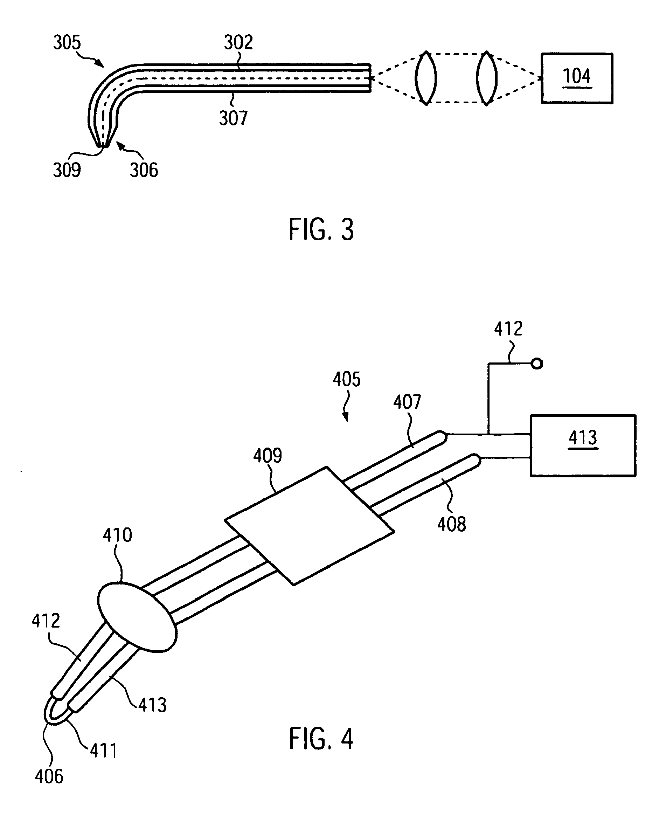

The cantilever 105 may be a conventional atomic force microscopy cantilever formed from an electrically conductive material such as doped silicon. Alternatively and/or additionally, the cantilever 105 can be formed from a material having a relatively low conductivity such as, for example, undoped silicon, and may be covered by a layer of electrically conductive material, for example a metal such as gold, platinum and/or antimony. Further embodiments of a cantilever comprising an electrically conductive tip which may be used in the atomic force microscope 116 will be described below with reference to Figs. 3 and 4.

The atomic force microscope 116 may further comprise a light source 109, which may comprise a laser diode, and a light detector 110 adapted to detect light emitted by the light source 109 and reflected by the cantilever 105. A deflection of the cantilever 105 caused by a force acting on the cantilever 105 may lead to an alteration of the intensity of the light reflected from the cantilever 105, such that a deflection of the cantilever 105 can be detected by measuring the intensity of the reflected light.

The apparatus 100 further comprises a voltage source 108 which is electrically connected between the cantilever 105 and the sample 200. In some embodiments, the sample 200 can be electrically connected to the sample holder 101 wherein the sample holder 101 is grounded, and the voltage source 108 can be connected between the cantilever 105 and ground. Moreover, in some embodiments, the voltage source 108 can be adapted to provide a direct voltage in a range from about 0 V to about 200 V. A resistor which may, in some embodiments, have a relatively large resistivity of about 1 G$\Omega$ or more can be provided between the voltage source 108 and the cantilever 105 to limit a current flowing through the cantilever 105 and/or the tip 106. This may help to avoid a damage of the cantilever 105, the tip 106 and/or the sample 200 if the field between the tip and the sample is high, so that leakage current occurs.

The apparatus 100 may further be adapted to change a temperature of the sample 200 when the sample 200 is provided in the sample holder 101. For this purpose, the apparatus 100 may comprise a light source 104, for example a laser diode adapted to emit infrared radiation. In some embodiments, the light source 104 can be adapted to emit radiation having a wavelength of about 808 nm. The apparatus 100 may further comprise means for directing electromagnetic radiation emitted by the light source 104 to the sample 200 provided in the sample holder 101 for irradiating the sample 200 with the electromagnetic radiation. In the embodiment shown in Fig. 1, the means for directing the electromagnetic radiation emitted by the light source 104 to the sample 200 comprise an optical conductor 102 and one or more lenses 103 for coupling the electromagnetic radiation into the optical conductor 102. The sample holder 101 and/or the sample 200 inserted into the sample holder may be provided between the optical conductor 102 and the tip 105.

The present invention is not restricted to embodiments wherein the temperature of the sample 200 is changed by irradiating the sample 200 with electromagnetic radiation. In other embodiments, the apparatus 100 may comprise an electric resistor and/or a thermocouple provided in the sample holder 101 or in the vicinity thereof, as well as a power supply adapted to supply an electric current to the electric resistor and/or the thermocouple for electric heating of at least a portion of the sample 200.

Moreover, the present invention is not restricted to embodiments wherein means for changing the temperature of the sample 200 are provided on a side of the sample 200 and/or the sample holder 101 opposite the cantilever 105 and the tip 105. In other embodiments, the means for changing the temperature of the sample 200 may be provided on the same side of the sample 200 and/or the sample holder 101 as the cantilever 105 and the tip 106. Below, examples of such embodiments will be described with reference to Figs. 3 and 4.

The apparatus 100 may further comprise a control unit 111. The control unit 111 can comprise a diode driver 113 adapted for driving the light source 104 when comprising a laser diode and a function generator 114 configured to control the diode driver such that the light source 104 emits electromagnetic radiation having a desired time dependence. Additionally, the control unit 111 can comprise an electronics module 112.

The electronics module 112 can be configured to control actuators for moving the tip 106 and the sample holder relative to each other. Additionally, the electronics module 112 may be adapted to receive a signal from the light 110 for measuring a deflection of the cantilever 105. The electronics module 112 and the function generator 114 can be connected to a computer 115, wherein the computer 115 is programmed to control the electronics module 112 and the function generator 114. The computer 115 may comprise a user interface by means of which a user may control the apparatus 100.

The control unit 111 can be adapted to measure a potential difference between a surface of the sample 200 when provided in the sample holder 101 and the tip 106 of the cantilever 105. For this purpose, the electronics module 112 may be adapted to simultaneously apply a direct voltage and a high frequency alternating voltage between the tip 106 and the sample 200 and/or the sample holder 101.

If there is a potential difference between the tip 106 and the surface of the sample 200, applying the high frequency alternating voltage between the sample 200 and the tip may cause an oscillating electrostatic force acting between the tip 106 and the sample 200, leading to an oscillation of the cantilever 105 which may be detected by measuring the intensity of light reflected from the cantilever 105 by means of the light detector 110.

The force between the tip 106 and the sample 200 may be calculated in accordance with the following equation:

$$F_{tip-sample} \propto \frac{dC}{dz} V^2$$

with the potential V:

$$V = V_{ac} \sin(\omega t) + (V_{tip} - V_{sample})$$

So $F_{tip-sample}$ can also be written in terms of different oscillating frequencies:

$$F_{tip-sample} = F_0 + F_1 \sin(\omega t + \varphi_1) + F_2 \sin(2\omega t + \varphi_2)$$

Where the part $F_1$ is proportional to:

$$F_1 \propto \frac{dC}{dz} V_{ac} (V_{tip} - V_{sample}) \tag{1}$$

wherein $F_{tip-sample}$ is the force between the tip 106 and the sample 200, dC/dz is the derivative of the capacity C between the tip 106 and the sample 200 with respect to the distance z between the tip 106 and the sample 200, $V_{ac}$ is the amplitude of the alternating voltage, $V_{tip}$ is the direct voltage and $V_{sample}$ is the potential of the surface of the sample 200, $F_0$, $F_1$, $F_2$, $\varphi_1$ and $\varphi_2$ are parameters of a truncated Fourier series expansion of Flip-sample and $\omega$ is the frequency of the alternating voltage. $F_1$ may be determined by measuring the force acting between the tip 106 and the sample 200 or a quantity representative thereof, for example the intensity of light measured by the light detector 110, and filtering the portion thereof at the frequency $\omega$.

Hence, if the direct voltage applied to the tip 106 is approximately equal to the potential of the surface of the sample 200, the force acting between the tip 106 at the frequency w and the sample 200 is approximately zero. Thus, the potential of the surface of the sample 200 can be determined by controlling the electronics module to adjust the direct voltage while the alternating voltage is applied in such a manner that the oscillation of the cantilever 105 caused by the force acting between the tip 106 and the sample 200 is reduced.

In one embodiment, the amplitude of the oscillation of the cantilever 105 may be compared with a threshold value, and the direct voltage may be adjusted until the amplitude of the oscillation is below the threshold value. Then, the value of the direct voltage can be output as a measurement value of the surface potential of the sample 200. The computer 115 can be configured to control the electronics module 112 to perform the measurement of the surface potential of the sample 200, and may be adapted to receive the measurement value of the surface potential of the sample 200 for processing and/or displaying the measurement value.

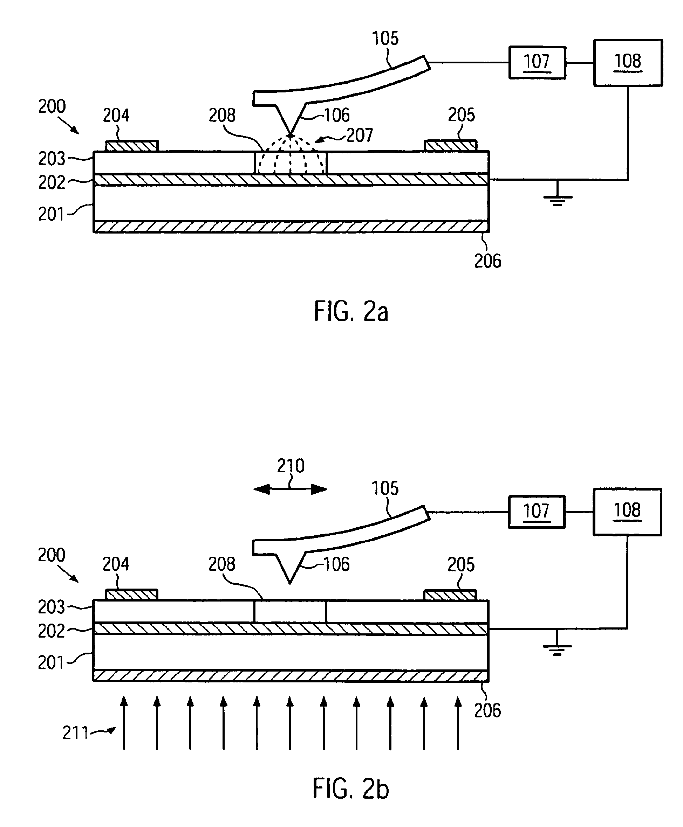

In the following, a method of creating a pyroelectric response according to the present invention wherein the apparatus 100 can be used will be described with reference to Figs. 1, 2a and 2b.

Fig. 2a shows a schematic cross-sectional view of the sample 200 in a first stage of the method according the present invention.

The sample 200 comprises a substrate 201. The substrate 201 may comprise an electrically non-conductive material. In one embodiment, the substrate 201 comprises a glass plate, and may have a thickness of approximately 175 $\mu$m. In further embodiments, the substrate may comprise an elastic material. For example, the substrate may comprise a film of polyethylene (PET), polyethylene naphtalate (PEN) and/or a stretchable film comprising one or more elastomers.

The substrate 201 may further comprise a bottom electrode 202 formed thereon. The bottom electrode 202 can comprise a layer of an electrically conductive material formed on the substrate 201. The bottom electrode 202 can be formed by means of physical vapor deposition. In physical vapor deposition which is well known to persons skilled in the art, the material of the bottom electrode is evaporated in vacuum. Vapor of the material may condensate on the substrate 201 to form the bottom electrode 202. In other embodiments, known deposition techniques other than physical vapor deposition, for example sputtering, chemical vapor deposition and/or plasma-enhanced chemical vapor deposition can be used to form the bottom electrode 202. In still further embodiments, solution processing techniques such as spin-coating, printing and/or imprinting may be employed in the formation of the bottom electrode 202.

In further embodiments, the substrate 201 may comprise an electrically conductive material. For example, the substrate 201 may comprise a metal such as aluminum or copper. In such embodiments, a bottom electrode 202 being distinct from the substrate 201 need not be formed, and the substrate 201 may serve as an electrode.

A material layer 203 comprising a plurality of ferroelectric domains may be formed over the bottom electrode 202.

The material layer 203 may comprise a fluoropolymer-based pyroelectric material. In one embodiment, the material layer 203 can comprise a copolymer of vinylidene fluoride and trifluoroethylene known to persons skilled in the art as P(VDF-TrFE) , and may have a thickness of about 400 nm. The material layer 203 when comprising P(VDF-TrFE) can be formed by means of a sol-gel process, which will be described in the following.

First, a solution of the material of the layer 203 may be prepared. For this purpose, a solvent, for example $\gamma$-butyrolactate may be heated to an elevated temperature of about 180 °C using a reflux condenser to avoid evaporation of the solvent. Thereafter, an amount of P(VDF-TrFE) pellets may be added to the solvent and can be dissolved. In some embodiments, an amount in a range from about 8% by weight to about 18% by weight, for example an amount of about 8% by weight, may be added to the solvent. The pellets may have a VDF:TrFE composition in a range from about 50:50 to about 100:0, for example a VDF:TrFE composition of about 65:35, of about 76:24, or of about 100:0. The solution may be kept at the elevated temperature for approximately 2 hours. Then, the solution may be cooled down to room temperature. After cooling down, the solution may be poured into a glass bottle and kept at room temperature for gelation.

Then, the material layer 203 can be formed by means of spin coating. For this purpose, the solution of the material of the layer 203 can be transferred to a low-viscous sol. Then, the sample 200 can be rotated at about 1000 revolutions per second, and the sol may be supplied to the sample 200 at a location in the vicinity of the axis of rotation of the sample 200. Centrifugal forces acting on the sol may distribute the sol over the surface of the sample 200.

Subsequently, a calcination step may be performed. For this purpose, the sample 200 can be heated to a temperature of about 110 °C, and may be kept at this temperature for approximately 5 hours. Then, the sample 200 can be slowly cooled down to room temperature over about 10 hours. This may help to obtain a high amount of the ferroelectric β-phase of P(VDF-TrFE) in the material layer 203. In the β-phase, the all-trans (TTTT) sample is established and all the dipoles in a molecule chain are substantially oriented in the same direction.

A sample of the material layer 203 may depend on the ratio of the amount of VDF to the amount of TrFE used in the formation of the material layer 203. The material layer 203, when comprising substantially pure PVDF, may be about 50% crystalline and may be rather compact, whereas the material layer 203, when comprising approximately 24% of TrFE may have a lamellar crystallite sample.

In some embodiments of the present invention, the material layer 203 may be characterized after the formation of the material layer 203. For example, the thickness of the material layer 203 can be determined by means of spectroscopic ellipsometry and/or the morphology of the material layer 203 can be characterized by means of atomic force microscopy. For investigating the surface of the material layer 203 by means of atomic force microscopy, the atomic force microscope 116 of the apparatus 100 according to the present invention may be used. For this purpose, the sample 200 may be inserted into the sample holder 101.

The present invention is not restricted to embodiments wherein the material layer 203 comprises P(VDF-TrFE). In other embodiments, the material layer may comprise a ferroelectric polymer material other than P(VDF-TrFE) such as polytetraflouroethylene (PTFE, also know as "Teflon"), , polyethylene (PE), perfluorinated cyclobutene (PFCB), or a ferroelectric ceramic material such as $BaTiO_3$, $PbZr_{0.95}Ti_{0.05}O_3$, $LiNbO_3$ $LiTaO_3$ and/or triglycine sulfate (TGS)

After the formation of the material layer 203, top electrodes 204, 205 can be formed over the material layer 203. This can be done by sputtering an electrically conductive material such as silver and/or aluminum via a shadow mask. In other embodiments, a method of physical vapor deposition other than sputtering, for example thermal evaporation, may be used for forming the top electrodes. The top electrodes may be used for performing macroscopic measurements of pyroelectric coefficients of the material layer by measuring an electric voltage between the bottom electrode 202 and one or both of the top electrodes 204, 205 while changing the temperature of the sample 202. In other embodiments, the top electrodes 204, 205 can be omitted.

The sample 200 may further comprise an absorption layer 206, which can, in some embodiments, be formed on a side of the substrate 201 opposite the bottom electrode 202, the material layer 203 and the top electrodes 204, 205. The absorption layer may comprise graphite, and can be formed, for example, by applying a graphite lacquer to the substrate 201. In other embodiments, the absorption layer 206 may comprise a material other than graphite, for example a metal having a rough surface obtainable by a laser treatment, for example black gold or nickel. In still further embodiments, the absorption layer may comprise a multilayer structure, for example a λ/4 structure or a combination of filters.

The present invention is not restricted to embodiments wherein the absorption layer 206 is formed on a side of the substrate 201 opposite the bottom electrode. In other embodiments, the absorption layer 206 may be formed between the substrate 201 and the bottom electrode 202 or between the bottom electrode 202 and the material layer 203.

Subsequently, the sample 200 can be inserted into the sample holder 101 of the apparatus 100. The bottom electrode 202 can be connected to ground and/or the voltage source 108, and the cantilever 105 comprising the tip 106 can be provided above the sample 100. For convenience, in Fig. 2a components of the apparatus 100 other than the sample 200, the cantilever 105, the tip 106, the resistor 107, the voltage source 108 and some electrical connections are not shown.

A poled region 208 can be formed in the material layer 203. For this purpose, the tip 206 can be provided at a distance to the surface of the sample 200 such that the tip 206 does not touch the surface of the sample 200. In such embodiments, a distance between the tip 206 and the surface of the sample 200 may be in a range from about 1 nm to about 3 nm. In other embodiments, the formation of the poled region 208 may be performed in a contact mode of the atomic force microscope 116. In embodiments wherein the sample 200 comprises top electrodes 204, 205, the tip 206 may be provided above a portion of the material layer 203 which is not covered by the top electrodes.

Thereafter, an electric voltage can be applied between the tip 106 and the bottom electrode 202 by switching on the voltage source 108. The electric voltage can be in a range from about 20V to about 200 V, and may be applied during a period of time from about 10 s to about 60 s. Applying the electric voltage may create an electric field between the tip 106 and the bottom electrode 102. In Fig. 2a, field lines of the electric field are schematically illustrated by dashed lines denoted by reference numeral 207. The electric field 207 may align dipoles of the material of the layer 203. Thus, a remanent ferroelectric polarization being greater than a remanent ferroelectric polarization of portions of the material layer outside the region 208 may be obtained in the region 208. In the following, the process of increasing the remanent ferroelectric polarization of a portion of the material layer 203 will be denoted as "poling".

In embodiments wherein the formation of the poled region 208 is performed in contact mode, at moderate voltages, a relatively low electric current or substantially no electric current at all may flow through the material layer 203. At relatively large voltages, a dielectric breakdown may occur in the material layer 203. In this case, the resistor 107 may limit a current flowing through the material layer 203. This may help to reduce or substantially avoid damages of the tip 106 and/or the sample 200.

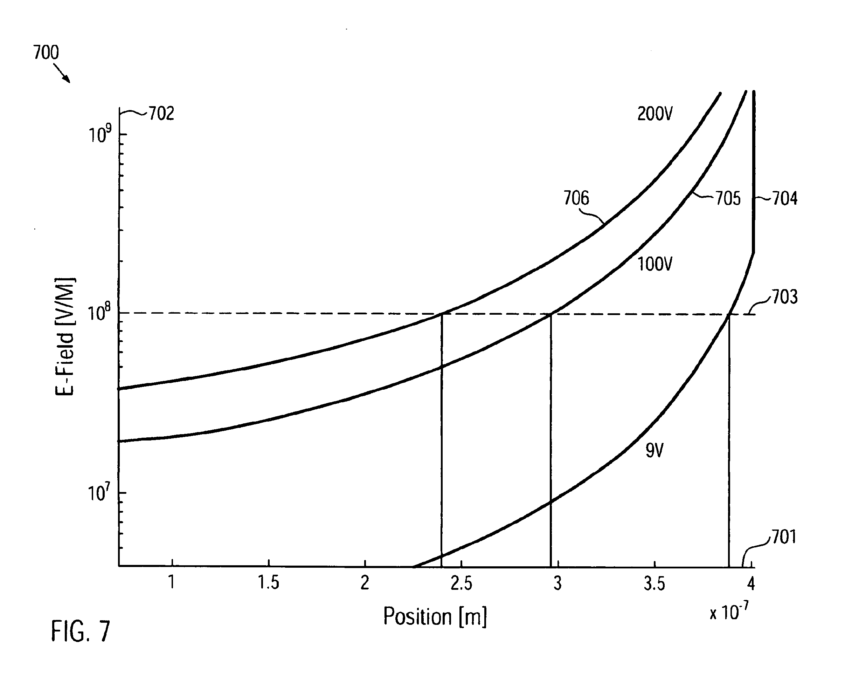

Fig. 7 shows a diagram 700 illustrating theoretical calculations of the electric field 207 in the material layer 203.

The electric field 207 may be calculated by solving Coulomb's law using methods known to persons skilled in the art, for example by means of a known mirror-charge approach. In Fig. 7, a horizontal coordinate axis 701 denotes a position along a direction perpendicular to the surface of the material layer 203. A vertical coordinate axis 702 denotes a component of the electrical field in the direction perpendicular to the surface of the material layer 203. A first curve 704 shows an electric field obtained by applying a voltage of 9 V between the tip 106 and the bottom electrode 202. A second curve 705 and a third curve 706 show an electric field obtained by applying a voltage of 100 V and a voltage of 200V between the tip 106 and the bottom electrode 202. A dashed line 703 illustrates a coercitive field required to align dipoles of the material layer 203 when comprising P(VDF-TrFE). In portions of the material layer 203 wherein the electric field strength exceeds the threshold field strength 703, the remanent ferroelectric polarization of the material layer 203 may be increased compared to other portions of the material layer 203 wherein the electric field strength remains below the threshold field strength. Since the electric field strength decreases with increasing distance from the tip 106, the increase of the remanent ferroelectric polarization of the material layer 203 may substantially occur only in the region 208.

The remanent ferroelectric polarization of the material layer 203 may lead to an increase of the potential of the surface of the material layer. In some embodiments of the present invention, the ferroelectric polarization of the material layer can be detected by measuring the electric potential of the surface of the material layer 203 after creating the poled region 208. As described above, this can be done by applying a high-frequency alternating voltage and a direct voltage between the cantilever 105 and the bottom electrode 202, and adjusting the direct voltage to reduce an oscillating force acting on the cantilever. The measurement of the surface potential can be performed at a plurality of locations of the material layer 203 by moving the tip 106 and the sample 200 relative to each other. Thus, spatially resolved measurements can be performed.

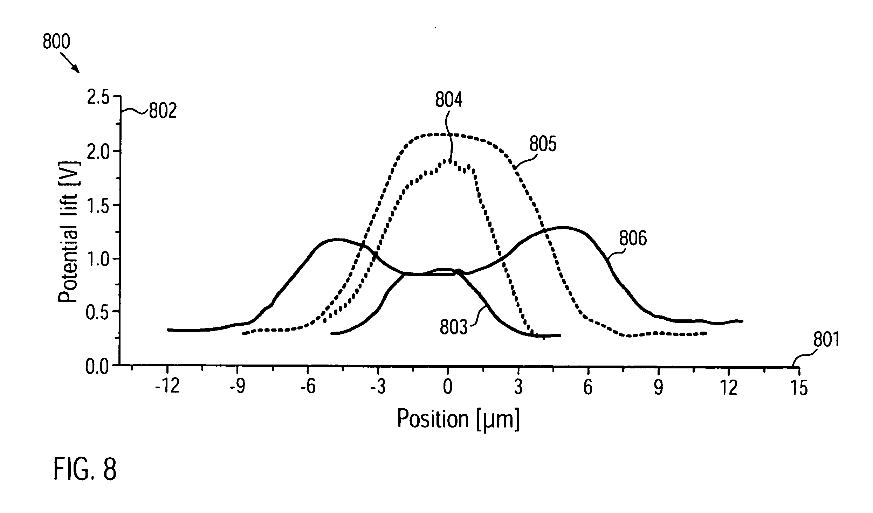

Fig. 8 shows a diagram illustrating results of measurements of the electric potential of the surface of the material layer 203 which were performed after applying an electric voltage between the tip 106 and the bottom electrode 202. A horizontal coordinate axis 801 denotes a position along the surface of the material layer 203, and a vertical coordinate axis 802 denotes the potential of the surface of the material layer 203 measured at the respective location. When the electric voltage was applied between the tip 106 and the bottom electrode layer 202, the tip 106 was provided approximately at position zero. Curves 803, 804, 805, 806 show results of measurements of the potential of the surface of the material layer 203 which were obtained after applying a voltage of about 40 V, a voltage of about 80 V, a voltage of about 100 V and a voltage of about 200 V, respectively, between the tip 106 and the bottom electrode 202. The measurements were performed using a sample 200 wherein the material layer 203 comprises a P(VDF-TrFE) copolymer film with 76:24% of VDF:TrFE (molecular weight).

The curves 803-806 show a step in the electric potential of the material layer 203 at the edge of the poled region 208, corresponding to a step in the remanent ferroelectric polarization of the material layer 203. The lateral extension of the poled region 208 depends on the electric voltage applied during the formation of the poled region 208, wherein the lateral extension of the poled region 208 increases as the electric voltage is increased. For electric voltages up to about 100 V, a substantially monotone increase of the remanent ferroelectric polarization is obtained. A further increase of the electric voltage only weakly enhances the step height of the surface potential but leads to a lateral extension of the poled region 208 comprising the enhanced remanent ferroelectric polarization. At a voltage of about 200 V, a decrease of the potential of the surface of the material layer 203 is obtained in the middle of the poled region 208. This may be explained with a dielectric breakdown obtained in small regions in the vicinity of the tip 106, leading to a degradation of the material of the layer 203 due to oxidation, carbonization and melting. Hence, applying an electric voltage smaller than 200 V may help to avoid a deterioration of the material layer 203 in the poled region 208.

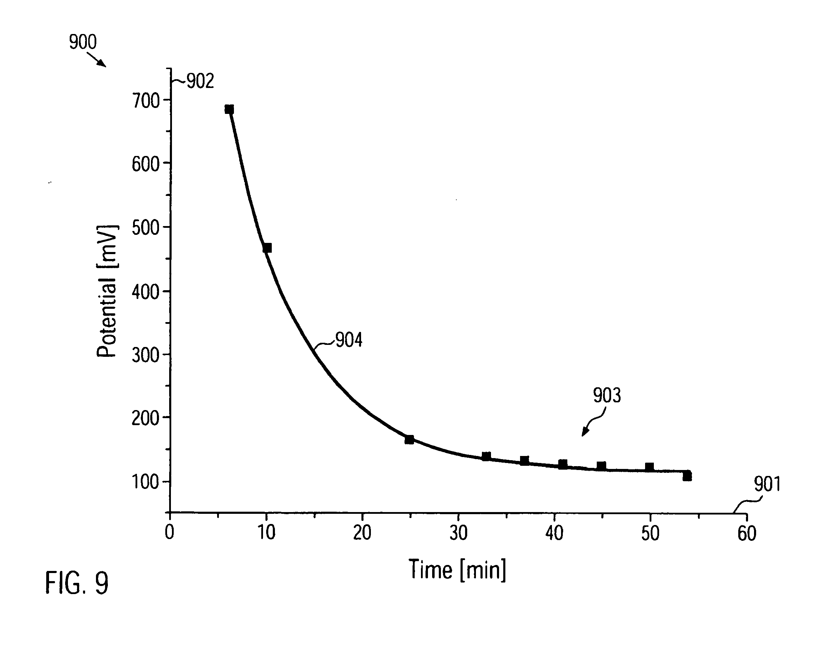

The electric potential of the surface of the material layer 203 after applying the electric voltage between the tip 106 and the bottom electrode 202 may decrease in the course of time. Fig. 9 shows results of a measurement of the step height of the electric potential measured in the poled region 208 in one embodiment of the present invention. A horizontal coordinate axis 901 denotes time and a vertical coordinate axis 902 denotes the step height of the electric potential. Reference numeral 903 denotes measurement data (shown as black squares), and reference numeral 904 denotes an exponential fit to the measurement data 903. As can be seen from Fig. 9, the step height of the electric potential decays with time, which may attributed to a decay of the remanent ferroelectric polarization in the poled region 208 of the material layer 203.

The measurement results shown in Fig. 9 were obtained while the sample 200 was provided in the ambient atmosphere, and the surface of the material layer 203 was exposed to the ambient atmosphere. Hence, the electric potential of the surface of the poled portion 208 of the material layer 203 may be reduced by an adhesion of charged particles from the atmosphere. The inventors of the present invention have found that a slower decay of the remanent ferroelectric polarization 208 may be obtained by providing the sample 200 in a noble gas atmosphere. In some embodiments, the sample 200 may be provided in an atmosphere comprising argon. In other embodiments, a protective layer may be formed over the material layer 203. Forming the protective layer and/or providing the sample 200 in the noble gas atmosphere may help to obtain a slower decay of the remanent ferroelectric polarization in the poled region 208 of the material layer 203.

In some embodiments of the present invention, the sample 200 may be maintained at a temperature greater than the Curie temperature of the material of the layer 203 while applying the electric voltage between the tip 106 and the bottom electrode 202. Subsequently, the sample 200 may be cooled to a temperature below the Curie temperature, with the voltage still applied. This may help to further slow down the decay of the remanent ferroelectric polarization in the poled region 208.

In some embodiments wherein the material layer 203 comprises PVDF, the remanent ferroelectric polarization of the poled region 208 may have a good long-time stability.

Fig. 2b shows a schematic cross-sectional view of the sample 200 in a later stage of the method of creating a pyroelectric response according to the present invention. After applying the electric voltage between the tip 106 and the bottom electrode 202 and optionally measuring an electric potential of the surface of the material layer 203, a temperature of at least the poled region 208 of the material layer 203 may be changed.

In some embodiments, the temperature change may be created by irradiating the sample 200 with electromagnetic radiation, for example by irradiating the sample 200 with infrared light. In other embodiments, the sample 200 may be irradiated with visible and/or ultraviolet light. In still further embodiments, the sample 200 can be irradiated with microwave radiation. In Fig. 2b, arrows 211 schematically illustrate the irradiation of the sample 200 with the electromagnetic radiation.

To irradiate the sample 200 with the electromagnetic radiation 211, the light source 104 may be operated. The electromagnetic radiation 211 emitted by the light source 104 can be coupled into the optical conductor 102 by means of the one or more lenses 103. A distal end 116 of the optical conductor 102 can be provided on a side of the substrate holder 101 and the sample 200 opposite the cantilever 105 and the tip 106 to irradiate a side of the sample 200 opposite the tip 106. The electromagnetic radiation may be absorbed by the absorption layer 206. Thus, the temperature of the absorption layer 206 or a portion thereof may increase. The increase of the temperature of the absorption layer 206 may lead to an increase of the temperature of the material layer 203 connected thereto.

In some embodiments, substantially the entire absorption layer 206 may be irradiated with the electromagnetic radiation. Thus, the temperature of substantially the entire material layer 203 may be changed. In other embodiments, a portion of the absorption layer 206 below the poled region 208 of the material layer 203 may selectively be irradiated with the electromagnetic radiation. For this purpose, the distal end 116 of the optical conductor 102 may have a diameter smaller than the size of the sample 200, and may be provided in the vicinity of the absorption layer 206, wherein a distance between the distal end 116 of the optical conductor 102 may be provided at a distance in range from about 0 mm to about 10 mm from the absorption layer 206.

In other embodiments, one or more lenses (not shown) may be provided between the distal end 116 of the optical conductor 102 and the sample 200. The one or more lenses may focus electromagnetic radiation emitted from the distal end 116 of the optical conductor 102 to a portion of the absorption layer 206 below the poled region 208 of the material layer 203.

The present invention is not restricted to embodiments wherein the temperature of the sample 200 is changed by irradiating the sample 200 with electromagnetic radiation. In other embodiments, the temperature 200 may be changed by means of a heat source and/or a heat sink being in thermal contact with the sample 200.

In some embodiments, the temperature of the poled region 208 of the material layer 203 may be changed in accordance with a substantially periodic function of time. In such embodiments, the function generator 114 may be controlled to supply an electric voltage and/or amperage having a substantially periodic dependence on time to the diode driver 104. The diode driver 104 may then drive the light source 104 in accordance with the periodic electric voltage and/or amperage.

In one embodiment, the function generator 114 can be configured to supply a square function to the diode driver 113 such that the light source 104 emits electromagnetic radiation the intensity of which is modulated in accordance with a square function. A frequency of the square function may have a value in a range from about 0.01 Hz to about 1 Hz. The present invention is not restricted to embodiments wherein the function generator 144 is configured to supply a square function to the diode driver 113. In other embodiments, a sinusoidal function, a sawtooth function or any other periodic function known to persons skilled in the art may be supplied to the diode driver 104.

In some embodiments, the temperature of the portion 208 of the material layer 103 can be calculated by solving the one dimensional thermal diffusion equation

$$\frac{\partial T(x,t)}{\partial t} = \frac{\delta_n}{c_n d_n} \frac{\partial^2 T(x,t)}{\partial x^2} \tag{2}$$

for each of the absorption layer 206, the substrate 201, the bottom electrode 202 and the material layer 203. In this equation $\delta_n$ is heat conductivity of the respective layer, $c_n$ is the specific heat of the respective layer and $d_n$ is the density

of the respective layer. T(x, t) is temperature as a function of a distance x in a direction substantially perpendicular to the surface of the material layer 203 and time t. The thermal diffusion equation can be solved by means of numerical and/or analytical methods known to persons skilled in the art.

Due to thermal diffusion and boundary conditions, the temperature change in the material layer 203 may depend not only on features of the material layer 203, but also on features of the absorption layer 106, the substrate 201 and the bottom electrode 202, for example on the thickness, the heat conductivity, the specific heat and the density of these layers.

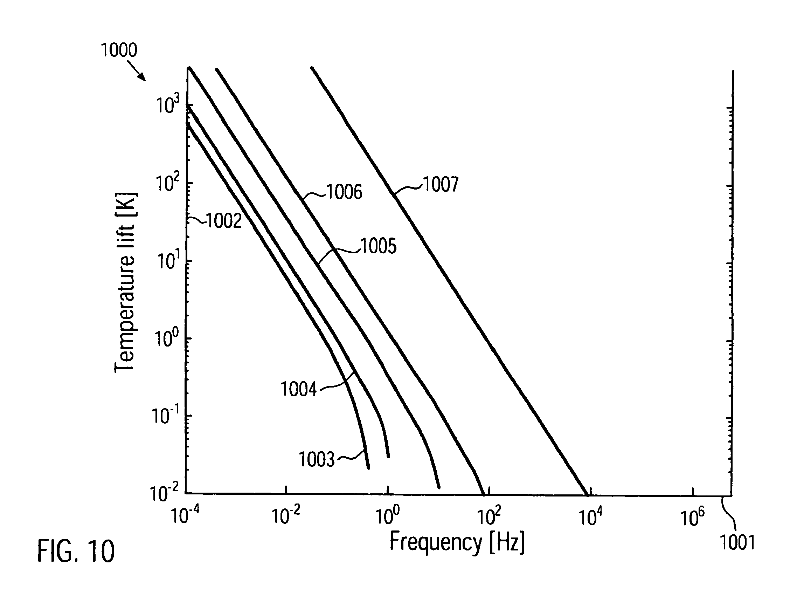

Fig. 10 shows a diagram illustrating the temperature change occurring in the material layer 203 in an embodiment wherein the material layer 203 comprises P(VDF-TrFE) and has a thickness of approximately 400 nm, the bottom electrode 202 comprises aluminum and has a thickness of approximately 50 nm and the substrate 201 comprises glass.

In Fig. 10, a horizontal coordinate axis 1001 denotes a frequency of a rectangular function applied to the diode driver 113 by the function generator 114 and a vertical coordinate axis 1002 denotes a change of the average temperature of the material layer 203 which is obtained between the on state of the light source 104 and the off state of the light source 104. In the embodiment, the light source 104 comprises a laser diode adapted to emit 8 mW of laser power which were directed to a spot of about 3 $mm^2$ on the absorption layer 206.

A first curve 1003 shows the temperature change obtained in the absence of the substrate 201. A second curve shows the temperature change obtained for a substrate thickness of 50 $\mu$m. Further curves 1005, 1006 and 1007 show the temperature change obtained for substrate thicknesses of 175 $\mu$m, 575 $\mu$m and 1 mm, respectively. In one embodiment, a frequency of the rectangular function may be about 0.1 Hz and the thickness of the substrate may be about 175 $\mu$m. In such embodiments, a temperature change in the material layer 203 in a range from about 2 K to about 3 K may be obtained.

The temperature change of the poled region 208 of the material layer 203 can create a pyroelectric response in the poled region 208 of the material layer 203. The pyroelectric response may be detected by measuring an electric potential between the surface of the material layer 203 and the bottom electrode 202.

In some embodiments, the measurement of the electric potential of the surface of the material layer 203 can comprise applying an alternating voltage and a direct voltage between the tip 106 and the bottom electrode 202 while the tip 106 is provided at a distance to the surface of the material layer 203 when the alternating voltage and the direct voltage are applied, detecting an electrostatic force acting on the tip 106 and adjusting the direct voltage to reduce the electrostatic force, as described above. In some embodiments, the measurement of the potential of the surface of the material layer 203 may be performed within a time period of about 6 minutes or less after the creation of the poled portion 208 of the material layer 203 to reduce or substantially avoid an influence of the decay of the remanent ferroelectric polarization on the measurement.

In some embodiments, the electric potential of the surface of the material layer 203 can be measured at a plurality of locations on the material layer 203. For this purpose, the cantilever 105 and the tip 106 can be moved relative to the sample 200, for example by activating piezoelectric actuators provided in the sample holder 101. While in some embodiments, one-dimensional measurements may be performed, wherein the tip 106 is moved along a line over the surface of the material layer 203, in other embodiments, two-dimensional measurements wherein a plurality of measurements are performed in accordance with a two-dimensional raster on the material layer 203.

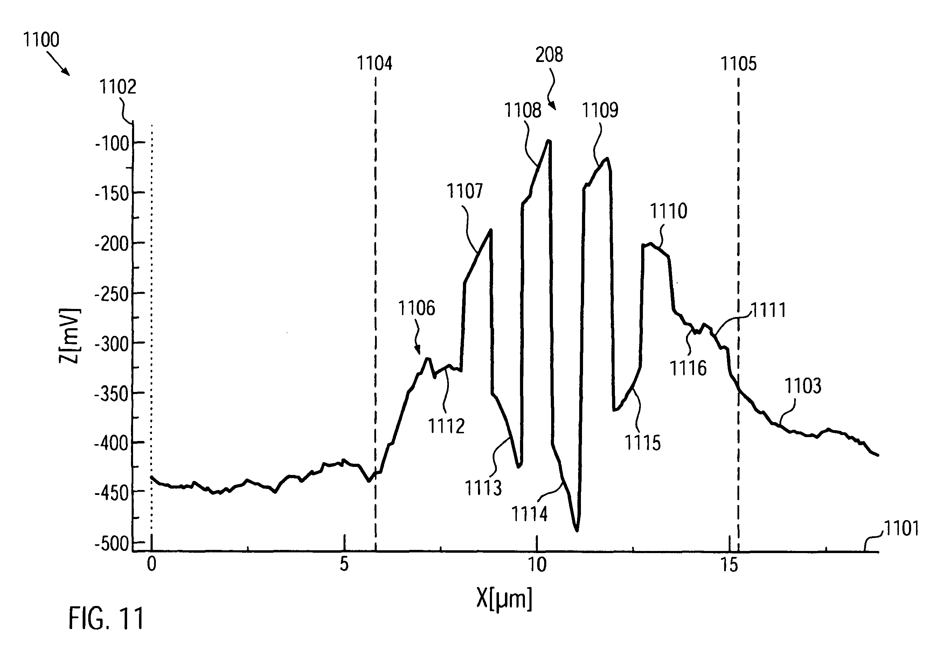

Fig. 11 shows a diagram 1100 illustrating results of measurements of the electric potential of the surface of the material layer 203 after poling a portion 208 of the material layer 203. In this embodiment, an electric voltage of about 100 V was applied for about 10 seconds between the tip 106 and the bottom electrode 202 to form the poled region 208. The tip was kept in contact mode to a very small area of about 100 $nm^2$. Thus, a size of the poled region 208 of about 5 $\mu m^2$ was obtained.

In Fig. 11, a horizontal coordinate axis 1101 denotes a position along the surface of the material layer 203 and a vertical coordinate axis 1102 denotes the electric potential of the surface of the material layer 203. A curve 1103 illustrates results of a plurality of measurements of the electric potential of the surface of the material layer 203 along a line extending across the material layer 203. Dashed lines 1104, 1105 show approximate locations of the edges of the poled region 208. The measurement was done by performing a two-dimensional scan of the surface of the material layer 203 with scanning lines in a direction perpendicular to the direction of the graph 1103. Curve 1103 shows a cross section of this measurement perpendicular to the scanning direction.

Due to the rectangular function supplied to the diode driver 113, a periodic alteration of the temperature of the material layer 203 was obtained during the measurement. During some of the line scans the light source was turned off and during some the light source was turned on. Hence, some of the measurements 1103 were performed while the light source 104 was switched on and some of the measurements 1103 were performed while the light source 104 was switched off.

Outside the poled region 208, a relatively weak pyroelectric response is obtained. Inside the poled region 208, oscillations of the curve 1103 corresponding to the periodic alteration of the temperature of the material layer 203 during the measurement of the electric potential of the surface of the material layer 203 are obtained. Portions 1106-1111 of the curve 1103 were recorded while the light source 104 was switched on such that an elevated temperature of the sample 200 was obtained due to the irradiation of the sample 200, and portions 1112-1116 were recorded while the light source 104 was switched off and a temperature of the sample 200 approximately equal to ambient temperature was obtained. Due to the pyroelectric response of the poled region 208 of the material layer 203, depending on the polarity of the electric voltage applied during poling, an increase or decrease of the electric potential of the surface of the material layer 203 is obtained while the light source 104 is switched on, and a decrease or increase of the electric potential of the surface of the material layer 203 is obtained while the light source 104 is switched off. Therefore, the electric potential of the surface of the material layer 203 fluctuates between portions 1106-1111 and portions 1112-1116 of the curve 1103.

As can be seen from Fig. 11, the poled region 208 has a diameter of approximately 5 μm. The electric potential of the surface of the material layer 203, as well as its fluctuations, are greatest in the center of the poled region 208, wherein the highest electric field was induced during the formation of the poled region 208 and, therefore, the remanent ferroelectric polarization is maximum.

Hence, according to the present invention, pyroelectric regions having a size on the order of magnitude of micrometers may be created, and the pyroelectric response of the poled region 208 may be measured at the resolution of the atomic force microscope 116.

In some embodiments, in addition to measuring the pyroelectric response of the material layer 203, measurements of the topography of the surface of the material layer 203 can be performed by means of the atomic force microscope 116.

In some of these embodiments, a two-pass technique can be used. In a first scan, topographic as well as phase information can be recorded, and in a second scan, the electric potential of the surface of the material layer 203 can be measured. Thus, both the topography and the pyroelectric response of the material layer 203 may be determined, and the topography and the pyroelectric response of the material layer 203 can be correlated with each other.

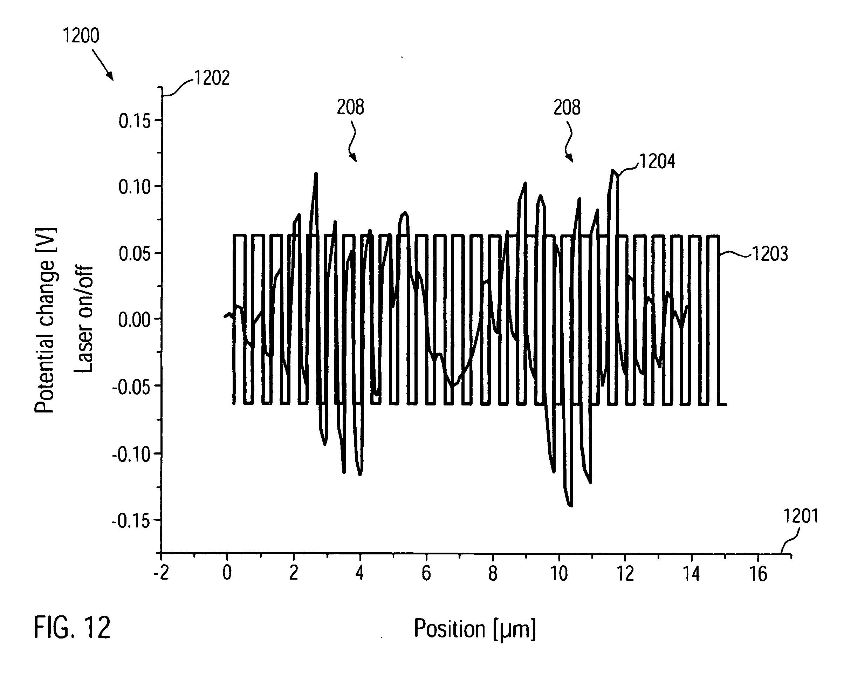

Fig. 12 shows a diagram 1200 illustrating results of another measurement performed in accordance with a method according to an embodiment of the present invention.

The diagram 1200 comprises a horizontal coordinate axis 1201 denoting a position along the surface of the material layer 201. A second coordinate axis 1202 denotes the electric potential of the surface of the material layer 203. A first curve 1204 shows the dependence of the electric potential of the surface of the material layer 203 on the position, and a second curve 1203 illustrates the periodic function applied to the diode driver 104. The light source 104 was switched on and off at a frequency of 0.1 Hz.In this embodiment, a first poled region 208 and a second poled region 208' were created in the material layer 203 by applying a voltage of approximately 100 V between the tip 106 and the bottom electrode 202. In the formation of the second poled region 208', the polarity of the voltage was inverse to the polarity applied in the formation of the first poled region 208. Therefore, the remanent ferroelectric polarization in the first poled region 208' is inverse to the remanent ferroelectric polarization in the first poled region 208.

As can be seen from Fig. 12, in the first poled region 208, the electric potential of the surface of the material layer 203 is increased when the light source 104 is switched on to increase the temperature of the material layer 203, and the electric potential of the surface of the material layer 203 is decreased when the light source 104 is switched off and the temperature of the material layer 203 is decreased. Contrary thereto, in the second poled region 208', the electric potential of the surface of the material layer 203 is decreased when the light source 104 is switched on and the temperature of the material layer 203 is increasing, and the electric potential of the surface of the material layer 203 is increased when the light source 104 is switched off an the temperature of the material layer 203 is decreasing. Hence, by creating the poled regions 208, 208' having an inverse remanent ferroelectric polarization, an inverse pyroelectric response may be obtained in the poled regions 208, 208'.

In some embodiments of the present invention, pyroelectric coefficients of the material layer 203 may be determined from the measurement of the pyroelectric response of the material layer 203. For this purpose, a temperature change of the material layer 203 may be determined, for example by solving the thermal diffusion equation (2) as described above. Thereafter, the pyroelectric coefficient $p_{pyro}$ may be calculated in accordance with

$$p_{pyro} = \frac{1}{\Delta T}\frac{V_{tip}}{d}\varepsilon_1\varepsilon_0 \qquad (3)$$

wherein $\Delta T$ is the temperature change, $V_{tip}$ is the direct voltage applied between the tip 106 and the bottom electrode 202 to reduce the force acting on the tip and which may correspond, at least approximately, to the electric potential of the surface of the material layer 203, d is the thickness of the material layer 203 , $\varepsilon_1$ is relative permittivity of the material layer 203 and $\varepsilon_0$ is the vacuum permittivity.

In some of these embodiments, the pyroelectric coefficient may be determined for a plurality of locations of the material layer. Thus, one-dimensional or two-dimensional maps of the pyroelectric coefficient can be determined, wherein the resolution may correspond to the resolution of the atomic force microscope 116.

The present invention is not restricted to embodiments wherein changing the temperature of the sample 200 comprises irradiating the sample 200 from a side opposite a tip which is used for applying an electric voltage to form the poled region 208 in the material layer 203. In other embodiments, the temperature of the sample 200 can be changed by irradiating the sample 200 from the side on which the tip is provided.

In the following, such an embodiment will be described with reference to Fig. 3.

Fig. 3 shows a cantilever 305 which may be provided in the apparatus 100 described above with reference to Fig. 1 instead of the cantilever 105. The cantilever 305 comprises a cantilevered optical conductor 302. A tip 306 is provided in form of an acute end of the optical conductor 302. A portion of the optical conductor 302 adjacent the tip 306 is bent such that the tip 306 may contact the sample 200 when the sample 200 is inserted into the sample holder 101 and the cantilever 305 is provided above the sample 200. An electrically conductive layer 307 may be formed on the optical conductor 302. Additionally, the electrically conductive layer 307 may at least partially cover the tip 306. In some embodiments, an end 309 of the tip 306 is not covered by the electrically conductive layer 307. Thus, electromagnetic radiation may leave the optical conductor 302 at the end 309 of the tip without being absorbed and/or reflected by the electrically conductive layer 307. In some embodiments, the electrically conductive layer 307 may comprise a metal such as gold, platinum and/or antimony.

The optical conductor 302 may comprise an optical fiber adapted to conduct infrared light, visible light and/or ultraviolet light. In some embodiments, light emitted by the light source 104 of the apparatus 100 described above may be coupled into the optical conductor 302 by means of one or more lenses 103, similar to the coupling of light from the light source 204 into the optical conductor 102 described above.

Electromagnetic radiation coupled into the optical conductor 302 may be guided to the end 309 of the tip 306 and may leave the optical conductor 302 at the end 309 of the tip 306. In some embodiments, a diameter of the end 309 of the tip 306 may be smaller than the wavelength of the electromagnetic radiation. Thus, an optical near field may be formed in the vicinity of the tip 306. If the tip 306 is provided in the vicinity of the sample 200, the optical near field may interact with a portion of the sample 200 in the vicinity of the tip 306 such that the portion of the sample 200 in the vicinity of the tip 306 is irradiated with the electromagnetic radiation. Hence, the cantilever 305 allows a selective irradiation of a small portion of the sample 200 with electromagnetic radiation. Thus, the temperature of a small portion of the material layer 203 may selectively be changed, wherein a size of the portion of the material layer 203 the temperature of which is changed can, in some embodiments, be approximately equal to or smaller than the wavelength of the electromagnetic radiation.

Similar to the cantilever 105 described above, the cantilever 305 can be electrically connected to the voltage source 108 and the electronics module 112. Thus, an electric voltage can be applied between the tip 309 and the sample 200 for forming a poled region 208 in a material layer on the sample 200, and the tip may be used for measuring an electric potential of the surface of the sample 200 using the method described above.

The present invention is not restricted to embodiments wherein the cantilever 305 comprises an optical conductor 302. In other embodiments, a cantilever similar to the cantilever 105 described above with reference to Fig. 1 which additionally comprises an aperture formed in the cantilever 105 and extending through the tip 306 may be used, similar to known cantilevers used in optical near field microscopy. Laser radiation may be focused onto the aperture, for example through a conventional optical microscope, and may irradiate the sample 200 through the aperture.

In still further embodiments, the sample 200 may be irradiated from the side on which the tip is provided by means of an optical conductor similar to the optical conductor 102 described above with reference to Fig. 1, wherein the optical conductor is arranged adjacent the tip 106 (Fig. 1). In such embodiments, a dimension of the optical conductor may be greater than a dimension of the tip. The optical conductor may be arranged such that electromagnetic radiation emitted by the optical conductor impinges obliquely on the sample 200, illuminating portions of the sample 200 below the tip 106. In other embodiments, the optical conductor may be arranged such that electromagnetic radiation emitted by the optical conductor impinges substantially perpendicular to the surface of the sample 200. In such embodiments, a temperature of portions of the sample 200 below the cantilever 105 may be changed due to heat conduction through the sample 200 and/or by irradiation with electromagnetic radiation diffracted at the cantilever 105. A position of the optical conductor may be selected such that light from the light source 109 may reach the light detector 110 after being reflected at the cantilever 105 without being obstructed by the optical conductor.

In still further embodiments, the sample 200 may be irradiated with electromagnetic radiation without using an optical conductor. In such embodiments, the light source 104 may be arranged such that radiation emitted by the light source 104 irradiates the sample 200, either from the side on which the cantilever 105 is provided, or from the side opposite the cantilever 105. In further embodiments, optical elements such as mirrors, prisms and/or lenses may be used to direct radiation emitted by the light source 104 towards the sample 200. In some embodiments, the sample 200 may simultaneously be irradiated both from the side on which the cantilever 105 is provided and from the side opposite the cantilever 105.

The present invention is not restricted to embodiments wherein the temperature of at least a portion of the sample 200 is changed by irradiating the sample 200 with electromagnetic radiation. In other embodiments, the temperature of the sample 200 or a portion thereof may be changed by means of a heating element. In the following, one such embodiment will be described with reference to Fig. 4.

Fig. 4 shows a schematic perspective view of a cantilever 405 which may be provided in the apparatus 100 described above instead of the cantilever 105 or the cantilever 305.

The cantilever comprises a first electrically conductive rod 407 and a second electrically conductive rod 408. A mirror 409 may be connected to one or both of the electrically conductive rods 407, 408 to allow a measurement of a deflection of the cantilever 405 by means of the light source 109 and the light detector 110, as described above with reference to Fig. 1. A spacer 410 comprising a dielectric material may be provided between the rods 407, 408 to avoid a contact between the rods 407, 408 which might lead to an electric shortcut between the rods 407, 408. Ends 412, 413 of the rods 407, 408 extending through the spacer 410 may be inclined towards each other, and an electrically conductive wire 406 is connected between the ends 412, 413 of the rods 407, 408.

A thickness of the wire 406 may be smaller than a thickness of the rods 407, 408, and an electric resistivity of the wire 406 can be greater than the electric resistivity of the rods 407, 408. In one embodiment, the wire 406 may comprise a Wollaston wire comprising an alloy of 90% Platinum and 10% Rhodium and having a thickness of about 5 $\mu$m. The rods 407, 408 may be connected to a power source 413 which may be provided in the apparatus 100 instead of the diode driver 113, and may be connected to the function generator 114. Hence, an electric current flowing through the rods 407, 408 and the wire 406 may be controlled by the output of the function generator. In one embodiment, a current may be supplied to the wires 407, 408 in accordance with a periodic rectangular function such that the current is periodically switched on and off.

Due to the electric resistivity of the wire 406, the current flowing through the wire 406 may heat the wire 406. The heat of the wire 406 may be transferred to a portion of the sample 200 provided in the vicinity of the wire 406, such that a temperature of the portion of the sample 406 may be changed on the basis of the function supplied by the function generator.

The cantilever 405 may further comprise an electric connection 412, which may be connected to one of the rods 407, 408. The electric connection 412 may be connected to the voltage source 108 via the resistor 107 and the electronics module. Thus, the wire 406 may function as a tip for applying an electric voltage for creating a poled region 208 in a material layer 203 on the sample 200. Additionally, a potential of the surface of the sample 200 may be measured as described above.

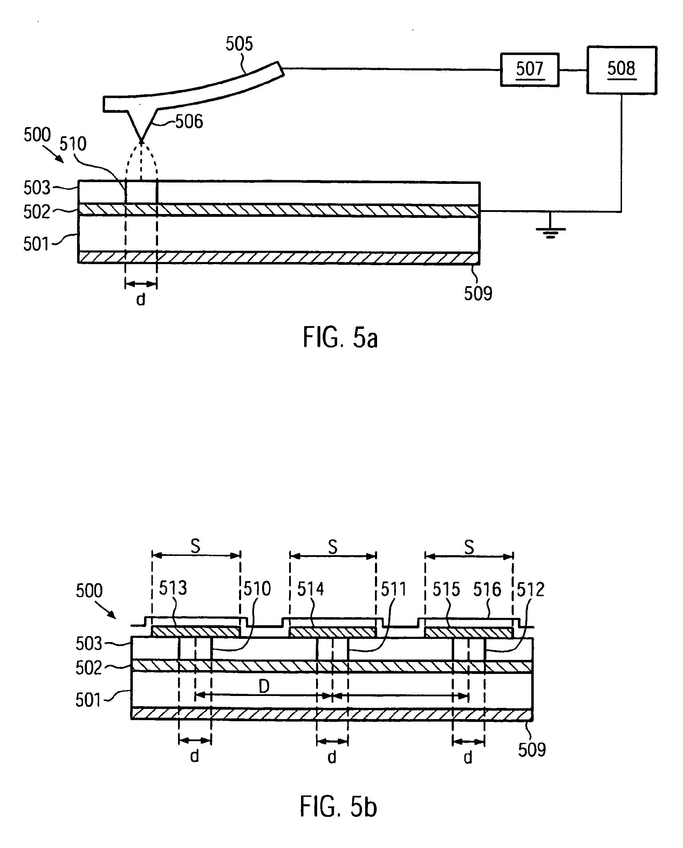

The present invention is not restricted to embodiments wherein the pyroelectric response of the material layer is detected by measuring the electric potential of the surface of the material layer by means of a tip 106, 306, 406 as described above with reference to Figs. 1, 3 and 4. In other embodiments, the electric potential of the surface of the material layer may be measured by forming a top electrode over the material layer after creating a poled region in the material layer and measuring an electric potential difference between the top electrode and a bottom electrode provided in a substrate. In the following, one such embodiment will be described with reference to Figs. 5a and 5b.

Fig. 5a shows a schematic cross-sectional view of a sample 500 which, after completion of a manufacturing method according to the present invention, may be used as a detector in a first stage of a manufacturing method according to an embodiment of the present invention.

Similar to the sample 200 described above with reference to Figs. 2a and 2b, the sample 500 may comprise an absorption layer 509, a substrate 501, a bottom electrode 502 and a layer 503 of a material comprising a plurality of ferroelectric domains. The absorption layer 509, the substrate 501, the bottom electrode 502 and the material layer 502 may have features similar to the absorption layer 206, the substrate 201, the bottom electrode 202 and the material layer 203 of the sample 200 described above.

An electrically conductive tip 506 is provided above the material layer 503. In some embodiments, the tip 506 may be connected to a cantilever 505. The sample 500 may be inserted into a sample holder similar to the sample holder 101 described above with reference to Fig. 1. The sample holder can be configured for moving the sample 500 relative to the tip 506 such that the tip 506 may be positioned over a predetermined location of the material layer 503.

After providing the electrically conductive tip 506 above the material layer 503, an electric voltage may be applied between the tip 506 and the bottom electrode 502. For this purpose, the cantilever 505 may be connected to a power source 508. A resistor 507 can be connected between the power source 508 and the cantilever 505 for limiting a current flowing through the cantilever 505 and the tip 506. Due to the electric voltage applied between the tip 506 and the bottom electrode 501, a poled region 510 having a remanent ferroelectric polarization being greater than the remanent ferroelectric polarization of other portions of the material layer 503 may be created in the vicinity of the tip 506. Since the electric field created by applying the electric voltage between the tip 506 and the bottom electrode 503 may decrease with increasing distance from the tip 506, portions of the material layer outside the poled region 510 may remain substantially unpoled.

Applying the electric voltage between the tip 506 and the bottom electrode 502 may be performed similar to applying the electric voltage between the tip 106 and the bottom electrode 202 in the embodiment described above with reference to Figs. 2a and 2b. Moreover, the voltage source 508 and the resistor 507 may have features similar to those of the resistor 107 and the voltage source 108 described above with reference to Fig. 1.

Fig. 5b shows a schematic cross-sectional view of the sample 500 in a later stage of the method according to the present invention.

After forming the poled region 510, further poled regions 511, 512 may be formed in the material layer 503. For this purpose, the sample 500 may be moved relative to the tip 506, for example by operating piezoelectric actuators in a sample holder wherein the sample 500 is provided. Thus, the tip 506 may be positioned at a location where one of the further poled region 511, 512, for example the poled region 511 is to be formed. Thereafter, an electric voltage may be applied between the tip 506 and the bottom electrode 502 to orient ferroelectric domains in the material layer 503. Thus, the poled region 511 can be created. Subsequently, the tip 506 may be positioned at the location where the other of the poled regions 511, 512, for example the poled region 512, is to be formed, and an electric voltage may be applied between the tip 506 and the bottom electrode 502 to form the poled region 512.

The electric voltage applied between the tip 506 and the bottom electrode 502 in the formation of the poled regions 510, 511, 512 and the distance between the tip and the material layer provided while the electric voltage is applied may be approximately equal. Thus, a substantially equal size of and remanent ferroelectric polarization in the poled regions 510, 511, 512 can be obtained. In some embodiments, the poled regions 510, 511, 512 may have a diameter d in a range from about 2 $\mu$m to about 20 $\mu$m. For example, the diameter d may have a value of about 5 $\mu$m. A distance D between centers of adjacent poled regions 510, 511, 512 may be greater than the diameter d of the poled regions. Thus, substantially unpoled portions of the material layer 503 wherein the remanent ferroelectric polarization can be substantially unaffected by the application of the electric voltage between the tip 506 and the bottom electrode may be provided between the poled regions 510, 511, 512. The substantially unpoled portions of the material layer 503 may separate the poled regions 510, 511, 512 from each other.

In some embodiments, the distance D may be greater than about twice the diameter d of the poled regions 510, 511, 512, greater than five times the diameter d of the poled regions 510, 511, 512, greater than 10 times the diameter d of the poled regions 510, 511, 512, or greater than 100 times the diameter d of the poled regions 510, 511, 512. The distance D may have a value in a range from about 1 $\mu$m to about 200 $\mu$m.

In some embodiments, the formation of the poled regions 510, 511, 512 may be performed while the sample 500 and the tip 506 are provided in a noble gas atmosphere. In other embodiments, the sample 500 and the tip 506 may be provided in vacuum. This may help to reduce or substantially avoid a relaxation of the remanent ferroelectric polarization in the poled region 510, 511, 512, which may be caused by an adhesion of charged particles from the ambient atmosphere to the sample 500 in embodiments wherein the formation of the poled regions 510, 511, 512 is performed in the ambient atmosphere. Moreover, the formation of the poled regions 510, 511, 512 may be performed at a temperature above the Curie temperature of the material of the layer 203, and the sample 200 may be cooled after the formation of the poled regions 510, 511, 512.

The present invention is not restricted to embodiments wherein three poled regions 510, 511, 512 are formed, as shown in Figs. 5a and 5b. In other embodiments, more than three poled regions may be formed. In some embodiments, a plurality of poled regions 510, 511, 512 which are arranged in a two-dimensional grid can be formed. In still further embodiments, only one poled region 510, 511, 512 can be formed.

After the formation of the poled regions 510, 511, 512, a plurality of electrodes 513, 514, 515 may be formed over the sample 500, wherein each of the electrodes 513, 514, 515 is provided over one of the poled regions 510, 511, 512. In embodiments wherein there is only one poled region, a single electrode may be formed.

In some embodiments, the formation of the poled regions 510, 511, 512 may comprise depositing a metal layer covering substantially the entire surface of the material layer 503 over the sample 500. For this purpose, known deposition processes such as sputtering, physical vapor deposition, chemical vapor deposition and/or plasma-enhanced chemical vapor deposition may be used. Thereafter, portions of the metal layer located over portions of the sample 500 where no electrodes 513, 514, 515 are to be formed may be removed, for example by forming a photoresist mask using known photolithographic techniques at the locations where the electrodes 513, 514, 515 are to be formed and etching away portions of the metal layer which are not covered by the photoresist mask. In other embodiments, the electrodes 513, 514, 515 may be formed by providing a shadow mask over the sample 500 and depositing a metal through the shadow mask. In still further embodiments, the electrodes 513, 514, 514 may be formed by techniques of imprinting known to persons skilled in the art. The electrodes 513, 514, 515 may substantially prevent or at least reduce a contact between the ambient atmosphere and the poled regions 510, 511, 512. This may help to reduce or substantially avoid a relaxation of the remanent ferroelectric polarization of the poled regions 510, 511, 512.

A diameter s of the electrodes 513, 514, 515 may be greater than the diameter d of the poled regions 510, 511, 512, and may be smaller than the distance D between the poled regions 510, 511, 512 such that a gap is provided between adjacent electrodes 513, 514, 515. In some embodiments, the diameter s of the electrodes may be more than twice the diameter d of the poled regions 510, 511, 512, more than five times the diameter d of the poled regions 510, 511, 512, more than 10 times the diameter d of the poled regions 510, 511, 512 and/or more than 100 times the diameter d of the poled regions 510, 511, 512. In further embodiments, the diameter d of the poled regions 510, 511, 512 may be approximately equal to the diameter s of the electrodes 513, 514, 515. The diameter s of the electrodes 513, 514, 515 may have a value in a range from about $10\mu m$ to about $200\mu m$

In some embodiments, a protection layer 516 may be formed over the sample 500 after the formation of the electrodes 513, 514, 15. The protection layer may comprise a dielectric material such as, for example, silicon dioxide and/or silicon nitride and can be formed by means of processes of chemical vapor deposition and/or plasma-enhanced chemical vapor deposition known to persons skilled in the art. The presence of the protection layer 516 may help to further reduce a contact between the material layer 503 and the ambient atmosphere and a relaxation of the remanent ferroelectric polarization in the poled regions 510, 511, 512. In some embodiments, the absorption layer 509 may be formed above the protection layer 516, or the protection layer 516 may be configured to absorb electromagnetic radiation having a desired wavelength.

In some embodiments, the formation of the poled regions 510, 511, 512 may be performed in a vacuum vessel wherein a vacuum is provided. After the formation of the poled regions, the electrodes 513, 514, 515 and, optionally, the protection layer 516 may be formed in the same vacuum vessel without exposing the sample 500 to the ambient atmosphere between the formation of the poled regions 510, 511, 512 and the formation of the electrodes 513, 514, 515 and, optionally, the protection layer 516. This may help to further reduce a relaxation of the remanent ferroelectric polarization in the poled regions 510,511,512.

The electrodes 513, 514, 515 as well as the bottom electrode 502 may be connected to an electronic circuit adapted to measure an electric potential between each of the electrodes 513, 514, 515 and the bottom electrode 502. The electric potential between the electrodes 513, 514, 515 and the bottom electrode 515 may change if a temperature change creates a pyroelectric response of the poled regions 510, 511, 512. By measuring the electric potential between each of the electrodes 513, 514, 515 and the bottom electrode 502, a spatially resolved measurement of the pyroelectric response and, hence, a spatially resolved measurement of the temperature change of the material layer 503 may be performed. In some embodiments, the electronic circuit can be formed on a portion of the substrate 201 which need not be covered by the material layer 203 using techniques known to persons skilled in the art.

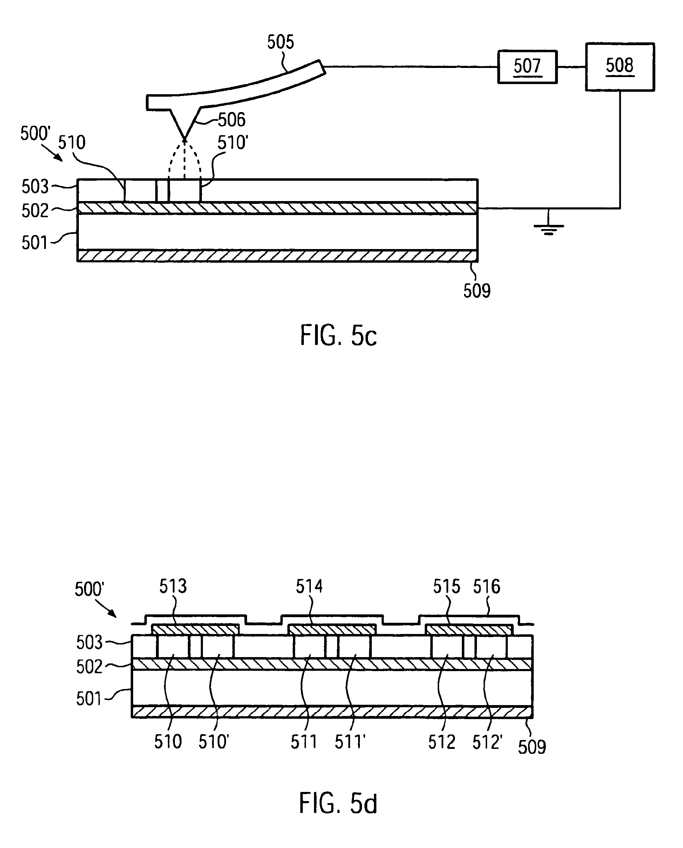

Thus, the sample 500 may be used as a detector adapted for spatially resolved detection of temperature changes. The presence of the substantially unpoled portions of the material layer 503 between the poled regions 510, 511, 512 may help to reduce a crosstalk between the poled regions 510, 511, 512 compared to detectors according to the state of the art. This may help to improve a resolution of the spatially resolved measurement of the temperature change compared to detectors according to the state of the art. Since the diameter d of the poled regions 510, 511, 512 may be smaller than the diameter of the electrodes 513, 514, 515, the distance D between the poled regions 510, 511, 512 may be increased while maintaining the size and distance of the electrodes 513, 514, 515. Hence, the complexity of the process used for the manufacturing of the electrodes 513, 514, 515 need not be increased. A method of forming a detector according to another embodiment of the present invention will be described with reference to Figs. 5c and 5d.

Fig. 5c shows a schematic cross-sectional view of a sample 500' in a first stage of a manufacturing process according to the present invention. Similar to the sample 500 described above with reference to Figs. 5a and 5b, the sample 500' comprises an absorption layer 509, a substrate 501, a bottom electrode 502 and a material layer 503. For convenience, in Figs. 5c and 5d

The material layer 503 may comprise a composite of a first ferroelectric material and a second ferroelectric material, wherein inclusions of the second ferroelectric material may be provided in a matrix of the second ferroelectric material. In one embodiment, the first ferroelectric material may comprise a copolymer material such as P(VDF-TrFE), and the second ferroelectric material may comprise a ceramic material, for example lead titanate. (PT). The first and the second ferroelectric material may differ in at least one of their coercive field, and the temperature dependence of the coercive filed.

The formation of the material layer 503 may comprise dissolving the first ferroelectric material in a solvent, similar to the formation of the material layer 203 described above with reference to Figs. 2a and 2b. Thereafter, a powder of the second ferroelectric material may be added to the solution and may be dispersed therein, for example by ultrasonic agitation. Thereafter, the sample 200 may be spin-coated with the solution, and a calcinations step wherein the sample 100 is exposed to an elevated temperature may be performed, similar to the calcinations step described above with reference to Figs. 2a and 2b.

After the formation of the material layer 203, an electrically conducive tip 506 may be provided above the material layer 503, and a first poled region 510 may be formed in the material layer 503 by applying a first electric voltage between the tip 506 and the bottom electrode 502. Thereafter, the sample 500' may be moved relative to the tip 506, and a second poled region 510' may be formed adjacent the first poled region 510 by applying a second electric voltage between the tip 506 and the bottom electrode 502.

The first electric voltage and the second electric voltage may be different. In one embodiment, the first electric voltage may be adapted such that an electric field strength which is greater than the coercive field of one of the first and the second ferroelectric material, and smaller than the coercitive filed of the other of the first and the second ferroelectric material is obtained in the first poled region 510. Thus, in the first poled region 510, only one of the first and the second ferroelectric material, for example the first ferroelectric material, may obtain a remanent ferroelectric polarization.

The second electric voltage may be adapted such that a field strength greater than the coercitive field of the first and the second ferroelectric material is obtained in the second poled region 510'. Thus, in the second poled region 510', both the first and the second ferroelectric material may obtain a remanent ferroelectric polarization.

In embodiments wherein the first and the second ferroelectric material differ in the temperature dependence of the coercitive field, the first poled region 510 and the second poled region 510' may be performed at a different temperature. For example, the formation of the first poled region 510 may be performed at a temperature which is greater than the Curie temperature of the first ferroelectric material and smaller than the Curie temperature of the second ferroelectric material. Thus, a remanent ferroelectric polarization is obtained only in the second ferroelectric material. The formation of the second poled region 510' may be performed at a temperature which is smaller than the Curie temperature of both the first and the second ferroelectric material. Thus, in the second poled region 510', both the first and the second ferroelectric material may obtain a remanent ferroelectric polarization.

The first and the second ferroelectric material may have different pyroelectric and/or piezoelectric coefficients. The fraction of the first and the second ferroelectric material in the material layer 503 may be selected such that a relatively large piezoelectric response and a relatively low pyroelectric response is obtained in one of the first 510 and the second 510' poled region, and a relatively large pyroelectric response and a relatively low piezoelectric response is obtained in the other of the first 510 and the second 510' poled region.

Fig. 5d shows a schematic cross-sectional view of the sample 500' in a later stage of the manufacturing process. After the formation of the first 510 and the second 510' poled region, further first poled regions 511, 512 and further second poled regions 511', 512' may be formed. The formation of the first poled regions 511, 512 may be performed similar to the formation of the first poled region 510, and the formation of the second poled regions 511', 512' may be performed similar to the formation of the second poled region 510'.

After the formation of the poled regions 510, 510', 511, 511', 512, 512', electrodes 513, 514, 515 may be formed over the material layer 503. Each of the electrodes 513, 514, 515 covers one of the first poled regions 510, 511, 512 and one of the second poled regions 510', 511', 512'. Thereafter, a protection layer 516 may be formed over the electrodes 513, 514, 515.

In case a temperature of the sample 500 or a portion thereof is changed, for example due to a contact between the sample 500 and a hot or cold object or due to an irradiation of the sample 500 with electromagnetic radiation, a pyroelectric response may be obtained in some of the poled regions 510, 510', 511, 511', 512, 512'. If a mechanic force is exhibited on the sample 500 or a portion thereof, a piezoelectric response may be obtained in some of the poled regions 510, 510', 511, 511', 512'. Since each of the electrodes 513, 514, 515 is formed over a poled region having pyroelectric properties and a poled region having piezoelectric properties, an electric voltage may be obtained between some or all of the electrodes 513, 514, 515 and the bottom electrode 502 if the temperature of the sample 500' is changed and if a mechanical force is exhibited on the sample 500. Hence, the sample 500' may be used both as a sensor for temperature changes and as a sensor for mechanical forces, wherein both temperature changes and mechanical forces may be detected in a spatially resolved manner. In some embodiments, the substrate 501 may comprise an elastic material. Thus, the sample 500' can be used as an artificial skin for robotic applications.

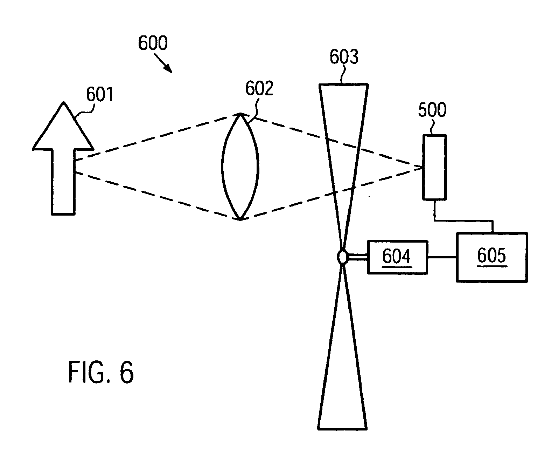

Fig. 6 shows a schematic sketch of a thermographic camera 600 wherein the sample 500 is used as a detector for infrared radiation emitted by an object 601. A lens 602 formed from a material which is transparent for infrared radiation such as, for example, germanium, is provided in front of the sample 500. The lens is adapted to form an image of the object 601 on the absorption layer 509. Thus, the sample 500 can be irradiated with infrared radiation emitted by the object 601.

A shutter wheel 603 which may be rotated by a motor 604 can be provided between the lens 603 and the sample 500. Thus, an optical path between the object 601 and the sample 500 may periodically be interrupted such that the sample 500 is periodically irradiated with the infrared radiation from the object 601.

Due to the absorption of the infrared radiation in the absorption layer 509, the temperature of portions of the sample 500 on which the image of the object 601 is formed can be altered in a periodic manner. Thus, a pyroelectric response may be created in some or all of the poled regions 510, 511, 512 which may be detected by means of a electronics module 605 connected to the electrodes 513, 514, 515 and the bottom electrode 502. Thus, a thermographic image of the object 601 may be obtained. The electronics module 605 may further be adapted to control the motor 604 of the shutter wheel 603.

The present invention is not restricted to embodiments wherein the sample 500 is used as a detector for infrared radiation. In other embodiments, a first chemical compound adapted to undergo an exothermic and/or endothermic reaction with and/or to catalyze a chemical reaction of a second chemical compound to be detected may be deposited over one or all of the electrodes 513, 514, 515. In the presence of the second chemical compound, a chemical reaction may occur, which may lead to an alteration of the temperature of one or all of the poled regions 513, 514, 515. The alteration of the temperature may create a pyroelectric response in some or all of the poled regions 510, 511, 512 which may be detected by measuring an electric voltage between the electrodes 513, 514, 515 and the bottom electrode 502. Thus, the presence of the second chemical compound may be detected. In one embodiment, the first chemical compound may comprise palladium and the second chemical compound may comprise hydrogen. In the presence of hydrogen and oxygen, the palladium may catalyze a chemical reaction between hydrogen and oxygen, which is exothermic. Thus, the presence of hydrogen in an atmosphere comprising oxygen or the presence of oxygen in an atmosphere comprising hydrogen may be detected. The present invention is not restricted to embodiments wherein the palladium is deposited over the electrodes 513, 514, 515. In other embodiments, the palladium may be provided in pores of the material layer 503.

**Claims**

1. A method of investigating a sample (200) comprising a pyroelectric material (203), comprising:

   changing a temperature of at least a portion of said sample (200), said temperature change creating a pyroelectric response of said pyroelectric material (203); and
   measuring an electric potential of a surface of said pyroelectric material (203) to detect said pyroelectric response, wherein measuring said electric potential of said surface of said pyroelectric material (203) comprises:

   applying an alternating voltage and a direct voltage between a tip (106, 306, 406) provided above said surface of said pyroelectric material (203) and a portion of said sample (200) opposite said tip (106, 306, 406); detecting a periodically oscillating force induced by said alternating voltage acting on said tip (106, 306, 406); adjusting said direct voltage to reduce said periodically oscillating force; and determining said electric potential on the basis of said adjusted direct voltage.

2. A method according to claim 1, further comprising:

   moving said tip (106, 306, 406) over said surface of said pyroelectric material (203); and
   performing a plurality of measurements of said electric potential of said surface of said material layer (203) while moving said tip (106, 306, 406).

3. A method according to claim 1 or 2 further comprising:

   before changing said temperature of at least a portion of said sample (200) and measuring said electric potential of said surface of said pyroelectric material (203),
   providing said electrically conductive tip (106, 306, 406) above said pyroelectric material (203) and;
   applying an electric voltage between said electrically conductive tip (106, 306, 406) and a bottom electrode (202) contacting said pyroelectric material (203) to pole a region (208) of said pyroelectric material (203) between said tip (106, 306, 406) and said bottom electrode (202), wherein a portion of said pyroelectric material (203) outside said region (208) is not poled;

4. A method as in any of claims 1 to 3, wherein changing said temperature comprises irradiating at least a portion of said sample (200) with electromagnetic radiation (211).

5. A method as in claim 4, wherein said electromagnetic radiation (211) is supplied to at least a portion of said sample (200) by means of an optical conductor (102, 302).

6. A method as in claim 5, wherein said optical conductor (102) is arranged on a side of said substrate (200) opposite said pyroelectric material (203).

7. A method as in claim 5, wherein said optical conductor (302) is connected to said tip (306).

8. An apparatus (100) for investigating a sample (200) comprising a material layer (203) formed over a bottom electrode (202), said material layer (203) having pyroelectric properties, said apparatus (100) comprising:

   an atomic force microscope (116) comprising an electrically conductive tip (106, 306, 406), a sample holder (101) adapted for receiving said sample (200) and means for moving said tip (106, 306, 406) relative to said sample holder (101);

means (108) for applying an electric voltage between said electrically conductive tip (106, 306, 406) and said bottom electrode (202) for poling a region (208) of said material layer (203) when said sample (200) is provided in said sample holder (101);

means for changing a temperature of at least a portion of said sample (200) when said sample (200) is provided in said sample holder (101); and

means (111) for measuring a potential difference between a surface of said sample (200) and said tip (106, 306, 406) when said sample (200) is provided in said sample holder (101),

wherein said means (111) for measuring said potential difference between said surface of said sample (200) and said tip (106, 306, 406) are adapted to apply an alternating voltage and a direct voltage between said tip (106, 306, 406) and said bottom electrode (202), to detect a periodically oscillating force induced by said alternating voltage acting on said tip (106, 306, 406), to adjust said direct voltage to reduce said periodically oscillating force and to determine said electric potential on the basis of said adjusted direct voltage.

9. An apparatus (100) according to claim 8, wherein said means for changing a temperature of at least a portion of said sample comprise means (102, 103, 104) for irradiating at least a portion of said sample (200) with electromagnetic radiation (211).

10. An apparatus (100) according to claim 9, wherein said means (102, 103, 104) for irradiating at least a portion of said sample (200) with electromagnetic radiation (211) comprises an optical conductor (102, 302) adapted to supply said electromagnetic radiation to said sample (200).

11. An apparatus (100) according to claim 10, wherein said sample holder (101) is provided between said tip (106) and said optical conductor (102)

12. An apparatus (100) according to claim 10, wherein said tip (306) comprises an acute portion of said optical conductor (302), said tip (306) further comprising an electrically conductive material (307) connected to said acute portion of said optical conductor (302) for providing said electric conductivity of said tip (306).

13. An apparatus (100) as in any of claims 8 to 12, wherein

said means for changing a temperature of at least a portion of said sample (200) comprise means (102, 103, 104) for irradiating said sample (200) with electromagnetic radiation (211), wherein an intensity of said electromagnetic radiation (211) is altered in a periodic manner; and

said means (111) for measuring a potential difference between said surface of said sample (200) and said tip (106, 306) are adapted to detect a change of a potential difference between a surface of said sample (200) and said tip (106, 306) in response to said periodic alteration of said intensity of electromagnetic radiation (211) when said sample (200) is provided in said sample holder (101) to detect a pyroelectric response of said material layer (203).

**Patentansprüche**

1. Ein Verfahren zum Untersuchen einer Probe (200), die ein pyroelektrisches Material (203) enthält, umfassend:

Ändern einer Temperatur von zumindest einem Teil der Probe (200), wobei die Temperaturänderung eine pyroelektrische Reaktion des pyroelektrischen Materials (203) erzeugt; und

Messen eines elektrischen Potentials einer Oberfläche des pyroelektrischen Materials (203), um die pyroelektrische Reaktion nachzuweisen, wobei das Messen des elektrischen Potentials der Oberfläche des pyroelektrischen Materials (203) umfasst:

Anlegen einer Wechselspannung und einer Gleichspannung zwischen einer Spitze (106, 306, 406), die sich über der Oberfläche des pyroelektrischen Materials (203) befindet, und einem Teil der Probe (200), der der Spitze (106, 306, 406) gegenüber liegt;

Nachweisen einer periodisch oszillierenden Kraft, die von der Wechselspannung hervorgerufen wird und auf die Spitze (106, 306, 406) wirkt;

Anpassen der Gleichspannung, um die periodisch oszillierende Kraft zu verringern; und

Bestimmen des elektrischen Potentials anhand der angepassten Gleichspannung.

2. Ein Verfahren gemäß Anspruch 1, zusätzlich umfassend:

   Bewegen der Spitze (106, 306, 406) über der Oberfläche des pyroelektrischen Materials (203); und
   Durchführen mehrerer Messungen des elektrischen Potentials der Oberfläche der Materialschicht (203) während
   die Spitze (106, 306, 406) bewegt wird.

3. Ein Verfahren gemäß Anspruch 1 oder 2, zusätzlich umfassend:

   Bereitstellen der elektrisch leitfähigen Spitze (106, 306, 406) über dem pyroelektrischen Material (203); und
   Anlegen einer elektrischen Spannung zwischen der elektrisch leitfähigen Spitze (106, 306, 406) und einer
   unteren Elektrode (202), die sich in Kontakt mit dem pyroelektrischen Material (203) befindet, um einen Bereich
   (208) des pyroelektrischen Materials (203) zwischen der Spitze (106, 306, 406) und der unteren Elektrode (202)
   zu polen, wobei ein Teil des pyroelektrischen Materials (203) ausserhalb des Bereichs (208) nicht gepolt wird;
   vor dem Ändern der Temperatur von zumindest einem Teil der Probe (200) und dem Messen des elektrischen
   Potentials der Oberfläche des pyroelektrischen Materials (203).

4. Ein Verfahren gemäß einem der Ansprüche 1 bis 3, wobei das Ändern der Temperatur ein Bestrahlen von zumindest
   einem Teil der Probe (200) mit elektromagnetischer Strahlung (211) umfasst.

5. Ein Verfahren gemäß Anspruch 4, wobei die elektromagnetische Strahlung (211) zumindest einem Teil der Probe
   (200) mit Hilfe eines Lichtleiters (102, 302) zugeführt wird.

6. Ein Verfahren gemäß Anspruch 5, wobei der Lichtleiter (102) auf einer Seite des Substrats (200), die dem pyroelektrischen Material (203) gegenüber liegt, angeordnet ist.

7. Ein Verfahren gemäß Anspruch 5, wobei der Lichtleiter (302) mit der Spitze (306) verbunden ist.

8. Eine Vorrichtung (100) zum Untersuchen einer Probe (200), die eine über einer unteren Elektrode (202) ausgebildete
   Materialschicht (203) umfasst, wobei die Materialschicht (203) pyroelektrische Eigenschaften aufweist, wobei die
   Vorrichtung (100) umfasst:

   Ein Rasterkraftmikroskop (116), das eine elektrisch leitfähige Spitze (106, 306, 406), einen Probenhalter (101),
   der dafür ausgelegt ist, die Probe (200) aufzunehmen und Mittel zum Bewegen der Spitze (106, 306, 406) relativ
   zu dem Probenhalter (101) umfasst;
   Mittel (108) zum Anlegen einer elektrischen Spannung zwischen der elektrisch leitfähigen Spitze (106, 306,
   406) und der unteren Elektrode (202) zum Polen eines Bereichs (208) der Materialschicht (203) wenn sich die
   Probe (200) in dem Probenhalter (101) befindet;
   Mittel zum Ändern einer Temperatur von zumindest einem Teil der Probe (200) wenn sich die Probe (200) in
   dem Probenhalter (101) befindet; und
   Mittel (111) zum Messen einer Potentialdifferenz zwischen einer Oberfläche der Probe (200) und der Spitze
   (106, 306, 406) wenn sich die Probe (200) in dem Probenhalter (101) befindet,
   wobei die Mittel (111) zum Messen der Potentialdifferenz zwischen der Oberfläche der Probe (200) und der
   Spitze (106, 306, 406) dafür ausgelegt sind, zwischen der Spitze (106, 306, 406) und der unteren Elektrode
   (202) eine Wechselspannung und eine Gleichspannung anzulegen, eine periodisch oszillierende Kraft, die von
   der Wechselspannung verursacht wird und auf die Spitze (106, 306, 406) wirkt, nachzuweisen, die Gleichspannung anzupassen, um die periodisch oszillierende Kraft zu verringern und das elektrische Potential anhand der
   angepassten Gleichspannung zu bestimmen.

9. Eine Vorrichtung (100) gemäß Anspruch 8, wobei die Mittel zum Ändern einer Temperatur von zumindest einem
   Teil der Probe Mittel (102, 103, 104) zum Bestrahlen von zumindest einem Teil der Probe (200) mit elektromagnetischer Strahlung (211) umfassen.

10. Eine Vorrichtung (100) gemäß Anspruch 9, wobei die Mittel (102, 103, 104) zum Bestrahlen von zumindest einem
    Teil der Probe (200) mit elekromagnetischer Strahlung (211) einen Lichtleiter (102, 302), der dafür ausgelegt ist,
    die elektromagnetische Strahlung der Probe (200) zuzuführen, umfassen.

11. Eine Vorrichtung (100) gemäß Anspruch 10, wobei sich der Probenhalter (101) zwischen der Spitze (106) und dem
    Lichtleiter (102) befindet.

**12.** Eine Vorrichtung (100) gemäß Anspruch 10, wobei die Spitze (306) einen spitzigen Teil des Lichtleiters (302) umfasst, und die Spitze (306) außerdem ein elektrisch leitfähiges Material (307) umfasst, das mit dem spitzigen Teil des Lichtleiters (302) verbunden ist, um die elektrische Leitfähigkeit der Spitze (306) bereit zu stellen.

**13.** Eine Vorrichtung (100) gemäß einem der Ansprüche 8 bis 12, wobei
die Mittel zum Ändern einer Temperatur von zumindest einem Teil der Probe (200) Mittel (102, 103, 104) zum Bestrahlen der Probe (200) mit elektromagnetischer Strahlung (211) umfassen, wobei eine Intensität der elektromagnetischen Strahlung (211) periodisch geändert wird; und
die Mittel (111) zum Messen einer Potentialdifferenz zwischen der Oberfläche der Probe (200) und der Spitze (106, 306) dafür ausgelegt sind, eine Änderung einer Potentialdifferenz zwischen einer Oberfläche der Probe (200) und der Spitze (106, 306) in Reaktion auf die periodische Änderung der Intensität der elektromagnetischen Strahlung (211) nachzuweisen, wenn sich die Probe (200) in dem Probenhalter (101) befindet, um eine pyroelektrische Reaktion der Materialschicht (203) nachzuweisen.

**Revendications**

**1.** Procédé pour examiner un échantillon (200) comportant un matériau pyroélectrique (203), comprenant :

le changement d'une température d'au moins une partie dudit échantillon (200), ledit changement de température créant une réponse pyroélectrique dudit matériau pyroélectrique (203) ; et
la mesure d'un potentiel électrique d'une surface dudit matériau pyroélectrique (203) pour détecter ladite réponse pyroélectrique, dans lequel la mesure dudit potentiel électrique de ladite surface dudit matériau pyroélectrique (203) comprend :

l'application d'une tension alternative et d'une tension continue entre une pointe (106, 306, 406) pourvue au-dessus de ladite surface dudit matériau pyroélectrique (203) et une partie dudit échantillon (200) faisant face à ladite pointe (106, 306, 406) ;
la détection d'une force à oscillation périodique induite par ladite tension alternative et agissant sur ladite pointe (106, 306, 406) ;
l'ajustement de ladite tension continue pour réduire ladite force à oscillation périodique ; et
la détermination dudit potentiel électrique sur base de ladite tension continue ajustée.

**2.** Procédé selon la revendication 1, comprenant en outre :

le déplacement de ladite pointe (106, 306, 406) au-dessus de ladite surface dudit matériau pyroélectrique (203) ; et
la mise en oeuvre d'une pluralité de mesures dudit potentiel électrique de ladite surface de ladite couche de matériau (203) lors du déplacement de ladite pointe (106, 306, 406).

**3.** Procédé selon la revendication 1 ou 2, comprenant en outre :

avant le changement de ladite température d'au moins une partie dudit échantillon (200) et la mesure dudit potentiel électrique de ladite surface dudit matériau pyroélectrique (203),
le placement de ladite pointe électriquement conductrice (106, 306, 406) au-dessus dudit matériau pyroélectrique (203), et ;
l'application d'une tension électrique entre ladite pointe électriquement conductrice (106, 306, 406) et une électrode inférieure (202) en contact avec ledit matériau pyroélectrique (203) pour polariser une région (208) dudit matériau pyroélectrique (203) entre ladite pointe (106, 306, 406) et ladite électrode inférieure (202), dans lequel une partie dudit matériau pyroélectrique (203) en dehors de ladite région (208) n'est pas polarisée.

**4.** Procédé selon l'une quelconque des revendications 1 à 3, dans lequel le changement de ladite température comprend l'irradiation d'au moins une partie dudit échantillon (200) avec une radiation électromagnétique (211).

**5.** Procédé selon la revendication 4, dans lequel ladite radiation électromagnétique (211) est fournie à au moins une partie dudit échantillon (200) au moyen d'un conducteur optique (102, 302).

**6.** Procédé selon la revendication 5, dans lequel ledit conducteur optique (102) est agencé sur un côté dudit substrat (200) faisant face audit matériau pyroélectrique (203).

7. Procédé selon la revendication 5, dans lequel ledit conducteur optique (302) est connecté à ladite pointe (306).

8. Appareil (100) pour examiner un échantillon (200) comprenant une couche de matériau (203) formée au-dessus d'une électrode inférieure (202), ladite couche de matériau (203) présentant des propriétés pyroélectriques, ledit appareil (100) comprenant :

un microscope à force atomique (116) comprenant une pointe électriquement conductrice (106, 306, 406), un support d'échantillon (101) adapté pour recevoir ledit échantillon (200), et un moyen pour déplacer ladite pointe (106, 306, 406) par rapport audit support d'échantillon (101) ;
un moyen (108) pour appliquer une tension électrique entre ladite pointe électriquement conductrice (106, 306, 406) et ladite électrode inférieure (202) pour polariser une région (208) de ladite couche de matériau (203) lorsque ledit échantillon (200) est pourvu dans ledit support d'échantillon (101) ;
un moyen pour changer une température d'au moins une partie dudit échantillon (200) lorsque ledit échantillon (200) est pourvu dans ledit support d'échantillon (101) ; et
un moyen (111) pour mesurer une différence de potentiel entre une surface dudit échantillon (200) et ladite pointe (106, 306, 406) lorsque ledit échantillon (200) est pourvu dans ledit support d'échantillon (101),
dans lequel ledit moyen (111) pour mesurer ladite différence de potentiel entre ladite surface dudit échantillon (200) et ladite pointe (106, 306, 406) est adapté pour appliquer une tension alternative et une tension continue entre ladite pointe (106, 306, 406) et ladite électrode inférieure (202), pour détecter une force à oscillation périodique induite par ladite tension alternative et agissant sur ladite pointe (106, 306, 406), pour ajuster ladite tension continue de manière à réduire ladite force à oscillation périodique, et pour déterminer ledit potentiel électrique sur base de ladite tension continue ajustée.

9. Appareil (100) selon la revendication 8, dans lequel ledit moyen pour changer une température d'au moins une partie dudit échantillon comprend un moyen (102, 103, 104) pour irradier au moins une partie dudit échantillon (200) avec une radiation électromagnétique (211).

10. Appareil (100) selon la revendication 9, dans lequel ledit moyen (102, 103, 104) pour irradier au moins une partie dudit échantillon (200) avec une radiation électromagnétique (211) comprend un conducteur optique (102, 302) adapté pour fournir ladite radiation électromagnétique audit échantillon (200).

11. Appareil (100) selon la revendication 10, dans lequel ledit support d'échantillon (101) est fourni entre ladite pointe (106) et ledit conducteur optique (102).

12. Appareil (100) selon la revendication 10, dans lequel ladite pointe (306) comprend une partie aiguë dudit conducteur optique (302), ladite pointe (306) comprenant en outre un matériau électriquement conducteur (307) connecté à ladite partie aiguë dudit conducteur optique (302) pour procurer ladite conductivité électrique de ladite pointe (306).

13. Appareil (100) selon l'une quelconque des revendications 8 à 12, dans lequel
ledit moyen pour changer une température d'au moins une partie dudit échantillon (200) comprend un moyen (102, 103, 104) pour irradier ledit échantillon (200) avec une radiation électromagnétique (211), dans lequel une intensité de ladite radiation électromagnétique (211) est modifiée de manière périodique ; et
ledit moyen (111) pour mesurer une différence de potentiel entre ladite surface dudit échantillon (200) et ladite pointe (106, 306) est adapté pour détecter un changement de différence de potentiel entre une surface dudit échantillon (200) et ladite pointe (106, 306) en réponse à ladite modification périodique de ladite intensité de radiation électromagnétique (211) lorsque ledit échantillon (200) est pourvu dans ledit support d'échantillon (101) pour détecter une réponse pyroélectrique de ladite couche de matériau (203).

FIG. 1

FIG. 2a

FIG. 2b

FIG. 3

FIG. 4

FIG. 5a

FIG. 5b

FIG. 5c

FIG. 5d

FIG. 6

FIG. 7

FIG. 8

FIG. 9

FIG. 10

FIG. 11

FIG. 12

Position [μm]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5182261 A
- JP 10040599 A
- US 6597639 B1
- US 3885301 A
- EP 0186813 A

### Non-patent literature cited in the description

- **LIU XIOAOYAN et al.** Thermal stability of LiTaO3 domains engineered by scanning force microscopic. *Applied Physics Letters,* 2006, vol. 89 (14), 142906-13
- **GUTHNER P et al.** Local poling of ferroelectric polymers by scanning force microscopy. *Applied Physics Letters,* 1992, vol. 61 (9), 1137-1139
- **LANG, S. B.** Pyroelectricity: From Ancient Curiosity to Modern Imaging Tool. *Physics Today,* August 2005, 31-36
- **PETERSON, B. W.** Mapping Surface Polarization in Thin Films of the Ferroelectric Polymer P(VDF-TrFE. *Ferroelectrics,* 2004, vol. 304, 51-54